(19) Europäisches Patentamt
European Patent Office
Office européen des brevets

(11) **EP 1 190 383 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(21) Anmeldenummer: **00930995.6**

(22) Anmeldetag: **03.04.2000**

(51) Int Cl.$^7$: **G06N 3/04**

(86) Internationale Anmeldenummer:
**PCT/DE00/01000**

(87) Internationale Veröffentlichungsnummer:
**WO 00/073992 (07.12.2000 Gazette 2000/49)**

(54) **VERFAHREN ZUR RECHNERGESTÜTZTEN ERMITTLUNG EINER ZUGEHÖRIGKEIT EINER VORGEGEBENEN EINGANGSGRÖSSE ZU EINEM CLUSTER**

METHOD FOR THE COMPUTER-ASSISTED DETERMINATION OF WHETHER A PREDETERMINED INPUT VALUE BELONGS TO A CLUSTER

PROCEDE DE DETERMINATION ASSISTEE PAR ORDINATEUR DE L'APPARTENANCE D'UNE GRANDEUR D'ENTREE DONNEE A UN GROUPE

(84) Benannte Vertragsstaaten:
**DE FR GB IT NL**

(30) Priorität: **18.05.1999 DE 19922771**

(43) Veröffentlichungstag der Anmeldung:
**27.03.2002 Patentblatt 2002/13**

(73) Patentinhaber: **SIEMENS AKTIENGESELLSCHAFT 80333 München (DE)**

(72) Erfinder:
• **NEUNEIER, Ralf
  D-81667 München (DE)**
• **ZIMMERMANN, Hans-Georg
  D-82319 Starnberg/Percha (DE)**

(56) Entgegenhaltungen:
**EP-A- 0 395 150          US-A- 5 065 040
US-A- 5 574 387**

• **GORI M ET AL: "AUTOASSOCIATOR-BASED MODELS FOR SPEAKER VERIFICATION" PATTERN RECOGNITION LETTERS,NL,NORTH-HOLLAND PUBL. AMSTERDAM, Bd. 17, Nr. 3, 6. März 1996 (1996-03-06), Seiten 241-250, XP000554361 ISSN: 0167-8655**
• **SILIPO R ET AL: "AUTOASSOCIATOR STRUCTURED NEURAL NETWORK FOR RHYTHM CLASSIFICATION OF LONG TERM ELECTROCARDIOGRAM" PROCEEDINGS OF THE COMPUTERS IN CARDIOLOGY CONFERENCE,US,LOS ALAMITOS, IEEE COMP. SOC. PRESS, Bd. -, 5. September 1993 (1993-09-05), Seiten 349-352, XP000478323 ISBN: 0-8186-5470-8**

**Beschreibung**

Die Erfindung betrifft Verfahren zur rechnergestützten Ermittlung einer Zugehörigkeit einer vorgegebenen Eingangsgröße zu einem Cluster, eine Anordnung miteinander verbundener Rechenelemente, ein Verfahren zum rechnergestützten Trainieren einer Anordnung miteinander verbundener Rechenelemente sowie ein Computerprogramm-Erzeugnis und ein computerlesbares Speichermedium zur rechnergestützten Ermittlung einer Zugehörigkeit einer vorgegebenen Eingangsgröße zu einem Cluster.

Aus [1] ist ein Fuzzy-Clustering-Verfahren zur Ermittlung einer Zugehörigkeit einer Eingangsgröße zu einem Cluster bekannt. Das aus [1] bekannte, auch als Fuzzy-C-Means-Clustering bezeichnete Verfahren wird zur Datenanalyse und Regelerzeugung eingesetzt.

Im Rahmen des Fuzzy-C-Means-Clusterings werden c Cluster und entsprechende Zugehörigkeiten von Datenvektoren $\underline{x}_k$ derart bestimmt, daß Datenvektoren, die in einem Datenraum nahe bei einem Cluster liegen, eine möglichst hohe Zugehörigkeit und weit von dem Cluster entfernt liegende Datenvektoren $\underline{x}_k$ eine möglichst geringe Zugehörigkeit zu dem jeweiligen Cluster aufweisen.

Dies wird durch Minimierung einer Summe der mit Zugehörigkeiten $u_{ik}^m$ gewichteten quadratischen euklidischen Abständen $d_{ik}^2$ erreicht. Es soll also eine Menge X von Datenvektoren $\underline{x}_k$

$$X = \{\underline{x}_1, \underline{x}_2, ..., \underline{x}_k, ..., \underline{x}_n\}$$

in c Cluster (Untermengen der Menge von Datenvektoren) gruppiert werden.

Die Cluster werden beschrieben durch eine Zugehörigkeitsmatrix $\underline{U}$, welche c Zeilen und n Spalten aufweist. Jedes Element $u_{ik}$ der Zugehörigkeitsmatrix $\underline{U}$ weist einen Wert innerhalb des Intervalls [0, 1] auf und beschreibt eine Zugehörigkeit des Datenvektors $\underline{x}_k$ zu dem i-ten Cluster.

Die Summe der Zugehörigkeiten des Datenvektors $\underline{x}_k$ in den c Clustern muß folgender Vorschrift genügen:

$$\sum_{i=1}^{c} u_{ik} = 1 \qquad \forall k = 1..n. \qquad (1)$$

Ein Cluster muß mindestens ein Element enthalten, so daß gilt:

$$\sum_{k=1}^{n} u_{ik} > 0 \qquad \forall i = 1..c. \qquad (2)$$

Die Kostenfunktion $J_m$ der Zugehörigkeitswerte wird gemäß folgender Vorschrift gebildet:

$$J_m = \sum_{i=1}^{c} \sum_{k=1}^{n} u_{ik}^m \cdot d_{ik}^2. \qquad (3)$$

Ein Abstand dik wird gebildet gemäß folgender Vorschrift:

$$d_{ik} = \left\| \underline{x}_k - \underline{v}_i \right\|_A = \sqrt{\left(\underline{x}_k - \underline{v}_i\right)^T \cdot \underline{A} \cdot \left(\underline{x}_k - \underline{v}_i\right)}. \qquad (4)$$

Es wird mit $\underline{A}$ eine vorgebbare induzierte Norm des inneren Produkts gemäß Vorschrift (4) bezeichnet, die üblicherweise durch die Identitätsmatrix gegeben ist (Euklidischer Abstand).

Die Minimierung der Kostenfunktion $J_m$ erfolgt unter Einsatz einer sogenannten Picard-Iteration.

Nacheinander werden Zugehörigkeitswerte $u_{ik}$ und Clusterzentren $\underline{v}_i$ gemäß folgenden Vorschriften gebildet:

$$u_{ik} = \frac{1}{\sum\limits_{j=1}^{c} \left(\frac{d_{ik}}{d_{jk}}\right)^{\frac{2}{m-1}}}, \qquad (5)$$

$$\underline{v}_i = \frac{\sum\limits_{k=1}^{n} u_{ik}^{m} \cdot \underline{x}_k}{\sum\limits_{k=1}^{n} u_{ik}^{m}}. \qquad (6)$$

Die Ermittlung der Zugehörigkeitswerte $u_{ik}$ und der Clusterzentren $\underline{v}_i$ wird solange wiederholt, bis eine festgelegte Anzahl von Iterationen durchgeführt worden ist oder bis eine Änderung der Zugehörigkeitswerte $u_{ik}$ und/oder bis eine Änderung der Clusterzentren $\underline{v}_i$ unter einem vorgegebenen Schwellenwert liegt.

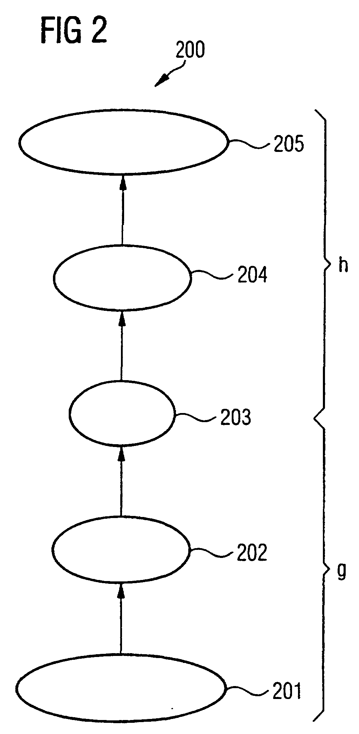

Aus [2] ist ein sogenannter neuronaler Autoassoziator bekannt (vgl. **Fig.2**).

Der Autoassoziator 200 besteht aus einer Eingangsschicht 201, drei verdeckten Schichten 202, 203, 204 sowie einer Ausgangsschicht 205.

Die Eingangsschicht 201 sowie eine erste verdeckte Schicht 202 und eine zweite verdeckte Schicht 203 bilden eine Einheit, mit der eine erste nichtlineare Koordinatentransformation g durchführbar ist.

Die zweite verdeckte Schicht 203 bildet gemeinsam mit einer dritten verdeckten Schicht 204 und der Ausgangsschicht 205 eine zweite Einheit, mit der eine zweite nichtlineare Koordinatentransformation h durchführbar ist.

Dieses aus [2] bekannte fünfschichtige neuronale Netz 200 weist die Eigenschaft auf, daß eine Eingangsgröße $x_t$ auf einen inneren Systemzustand transformiert wird gemäß der ersten nichtlinearen Koordinatentransformation g. Ausgehend von der zweiten verdeckten Schicht 203 wird unter Verwendung der dritten verdeckten Schicht 204 hin zu der Ausgangsschicht 205 unter Verwendung der zweiten nicht linearen Koordinatentransformation h der innere Systemzustand im wesentlichen auf die Eingangsgröße $x_t$ rücktransformiert.

Ziel dieser bekannten Struktur ist die Abbildung der Eingangsgröße $x_t$ in einem ersten Zustandsraum X auf den inneren Zustand $s_t$ in einem zweiten Zustandsraum S, wobei die Dimension des zweiten Zustandsraum Dim(S) kleiner sein soll als die Dimension des ersten Zustandsraum Dim(X), um eine Datenkompression in der versteckten Schicht des Neuronalen Netzes zu erreichen. Die Rücktransformation in den ersten Zustandsraum X entspricht in diesem Fall einer Dekompression.

Es ist anzumerken, daß eine Datenkompression und eine Datendekompression unter Verwendung des oben beschriebenen Autoassoziators 200 auch möglich ist, wenn die erste verdeckte Schicht 202 und die dritte verdeckte Schicht weggelassen werden.

Aus dem Dokument GOR M ET AL: 'AUTOASSOCIATOR-BASED MODELS FOR SPEAKER VERIFICATION' PATTERN RECOGNITION LETTERS,NL,NORTH-HOLLAND PUBL. AMSTERDAM, Bd. 17, Nr. 3, 6. März 1996 (1996-03-06), Seiten 241-250, ISSN: 0167-8655 ist ein Verfahren zur rechnergestützten Auswahl eines Clusters aus einer vorgegebenen Mehrzahl an Clustern gemäß einer Eingangsgröße bekannt, wobei jeder der vorgegebenen Cluster durch einen eigenen Autoassoziator, der eine Eingangsgröße auf eine Ausgangsgröße abbildet repräsentiert wird, und eine vorgegebene Eingangsgröße jedem Autoassoziator als Eingangsgröße zugeführt wird und für jeden Autoassoziator eine Abweichung der Eingangsgröße von der jeweiligen Ausgangsgröße ermittelt wird, sowie bei der aus den ermittelten Abweichungen der Cluster aus den vorgegebenen Clustern ausgewählt wird. Das Dokument offenbart jedoch nicht, daß alle Abweichungen zur Ermittlung jeweiliger Wahrscheinlichkeiten für die Zugehörigkeit der Eingangsgröße zu dem jeweiligen durch den Autoassoziator repräsentierten, vorgegebenen Cluster transformiert und gewichtet werden und die so erhaltenen Werte anschließend zu einer Zugehörigkeitsgröße zusammengefaßt werden, sowie dass unter Verwendung dieser Zugehörigkeitsgröße ein Cluster aus den vorgegebenen Clustern ausgewählt wird.

Die bekannten Anordnungen und Verfahren weisen insbesondere den Nachteil auf, daß eine Ermittlung einer Zugehörigkeit einer Eingangsgröße nicht mit hinreichender Genauigkeit möglich ist.

Somit liegt der Erfindung das Problem zugrunde, eine Anordnung miteinander verbundener Rechenelementen anzugeben, mit der eine Ermittlung einer Zugehörigkeit einer vorgegebenen Eingangsgröße zu einem Cluster möglich ist und welche Anordnung nicht den oben beschriebenen Nachteilen der bekannten Anordnungen unterliegt.

Ferner liegt der Erfindung das Problem zugrunde, ein Verfahren zur rechnergestützten Ermittlung einer Zugehörigkeit einer vorgegebenen Eingangsgröße zu einem Cluster anzugeben, mit welchem Verfahren die Ermittlung der Zugehörigkeit der Eingangsgröße mit größerer Genauigkeit als bei den bekannten Verfahren möglich ist.

Die Probleme werden durch die Verfahren sowie die Anordnung mit den Merkmalen gemäß den unabhängigen Ansprüchen gelöst.

Durch die Erfindung wird die Ermittlung einer Zugehörigkeit einer vorgegebenen Eingangsgröße, welche Eingangsgröße insbesondere eine hochdimensionale Eingangsgröße ist, zu einem Cluster möglich.

Ferner weist die Erfindung den Vorteil auf, daß die Zugehörigkeit einer vorgegeben Eingangsgröße auch dann ermittelt werden kann, wenn die Eingangsgröße numerische Werte, welche numerischen Werte sowohl nominale Werte, ordinale Werte als auch kontinuierliche Werte sind, umfaßt.

Darüber hinaus weist die Erfindung den Vorteil auf, daß durch die Erfindung eine Ermittlung einer Zugehörigkeit einer Eingangsgröße zu einem Cluster, welcher Cluster sehr groß oder sehr klein ist, d.h. sehr viele Elemente oder sehr wenige Elemente aufweist, möglich ist. Insbesondere ist durch die Erfindung eine Klassifikation bei sogenannten "unbalanced classes" möglich. Unter "unbalanced classes" werden eine erste Klasse und eine zweite Klasse verstanden, wobei die erste Klasse sehr viel mehr Elemente aufweist als die zweite Klasse.

Bevorzugte Weiterbildungen der Erfindung ergeben sich aus den abhängigen Ansprüchen.

Die im weiteren beschriebenen Weiterbildungen beziehen sich sowohl auf die Verfahren und die Anordnung.

Die Erfindung und die im weiteren beschriebenen Weiterbildungen können sowohl in Software als auch in Hardware, beispielsweise unter Verwendung einer speziellen elektrischen Schaltung realisiert werden.

Bei komplexen technischen Systemen, bei welchen Zustände des technischen Systems durch die Eingangsgröße beschrieben wird, ist die Eingangsgröße eine mehrdimensionale Eingangsgröße. Die Eingangsgröße kann sowohl nominale als auch ordinale sowie kontinuierliche Größen aufweisen.

Bei einer Weiterbildung wird die Abweichung in einen dritten Zustandsraum transformiert und die Zugehörigkeit der Eingangsgröße zu dem Cluster unter Verwendung der transformierten Abweichung ermittelt.

Bevorzugt ist der dritte Zustandsraum ein eindimensionaler Zustandsraum.

Bei einer Weiterbildung werden die Transformation der Eingangsgrößen und die Zurücktransformation der transformierten Eingangsgröße unter Verwendung eines Autoassoziators durchgeführt.

Bevorzugt sind zumindest ein Teil der Rechenelemente künstliche Neuronen.

Die Verbindungen zwischen den Rechenelementen können variabel ausgestaltet und gewichtet sein. Bevorzugt wird eine Weiterbildung für eine Klassifikation eines Zustands eines technischen Systems, welcher Zustand durch die Eingangsgröße beschrieben wird, eingesetzt. Die Anordnung gemäß einer Weiterbildung eignet sich insbesondere zur Überwachung und/oder Steuerung eines technischen Systems.

Eine Ausgestaltung wird bevorzugt für eine Klassifikation eines Kunden, wobei Eigenschaften des Kunden durch die Eingangsgröße beschrieben werden, eingesetzt.

Die Anordnung gemäße einer Weiterbildung weist eine Meßanordnung zur Erfassung physikalischer Signale, mit denen das technische System beschrieben wird, auf.

Ausführungsbeispiele der Erfindung sind in den Figuren dargestellt und werden im weiteren näher erläutert:

Es zeigen

Figur 1                eine Skizze einer Anordnung gemäß eines ersten Ausführungsbeispiels;

Figur 2                eine Skizze eines Autoassoziators gemäß dem Stand der Technik;

Figur 3                eine Skizze eines chemischen Reaktors, von dem Größen gemessen werden, welche mit der Anordnung gemäß dem ersten Ausführungsbeispiel weiterverarbeitet werden;

Figuren 4a, 4b und 4c    Skizzen von Anordnung gemäß dem ersten Ausführungsbeispiel bei einem Training;

Figur 5                eine Skizze einer Anordnung gemäß einem zweiten Ausführungsbeispiel;

Figur 6                eine Skizze, welche einen Verfahrensablauf gemäß dem ersten oder zweiten Ausführungsbeispiel beschreibt.

**Erstes Ausführungsbeispiel: Chemischer Reaktor**

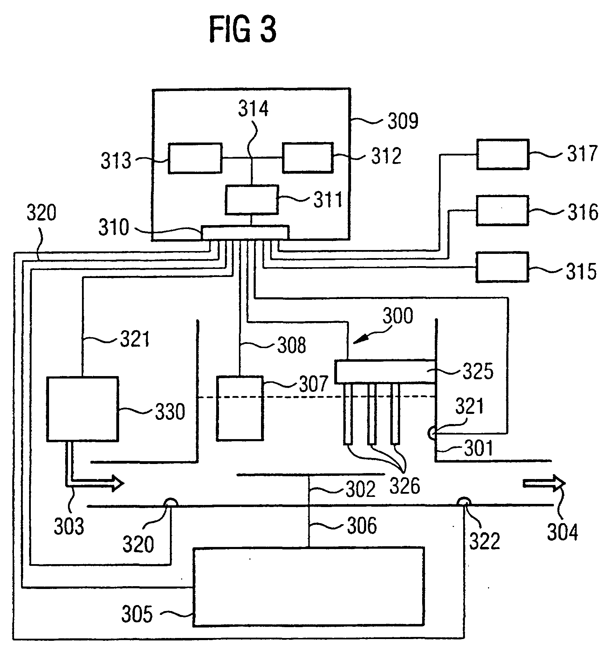

<u>Fig.3</u> zeigt einen chemischen Reaktor 300, der mit einer chemischen Substanz 301 gefüllt ist. Der chemische Reaktor 300 umfaßt einen Rührer 302, mit dem die chemische Substanz 301 gerührt wird. In den chemischen Reaktor 300 einfließende weitere chemische Substanzen 303 reagieren während eines vorgebbaren Zeitraums in dem chemischen Reaktor 300 mit der in dem chemischen Reaktor 300 bereits enthaltenen chemischen Substanz 301. Eine aus dem Reaktor 300 ausfließende Substanz 304 wird aus dem chemischen Reaktor 300 über einen Ausgang abgeleitet.

Der Rührer 302 ist über eine Leitung mit einer Steuereinheit 305 verbunden, mit der über ein Steuersignal 306 eine Rührfrequenz des Rührers 302 einstellbar ist.

Ferner ist ein Meßgerät 307 vorgesehen, mit dem Konzentrationen von in der chemischen Substanz 301 enthaltenen chemischen Stoffe gemessen werden.

Desweiteren sind ein Meßgerät 320, ein Meßgerät 321 und ein Meßgerät 322 vorgesehen, mit welchen jeweils eine Temperatur der einfließenden Substanzen 303, eine Temperatur der im Reaktor 300 bereits enthaltenen Substanz 301 und eine Temperatur der ausfließenden Substanz 304 gemessen werden.

Zusätzlich weist der chemische Reaktor 300 eine Kühlanordnung 325 auf, welche mehrere Kühlstäbe 326 umfaßt. Unter Verwendung der Kühlanordnung wird die bereits im Reaktor 300 enthaltenen chemische Substanz 301 gekühlt.

Meßsignale 308 werden einem Rechner 309 zugeführt, in dem Rechner 309 über eine Eingangs-/Ausgangsschnittstelle 310 und einem Analog/Digital-Wandler 311 digitalisiert und in einem Speicher 312 gespeichert. Ein Prozessor 313 ist ebenso wie der Speicher 312 über einen Bus 313 mit dem Analog/Digital-Wandler 311 verbunden. Der Rechner 309 ist ferner über die Eingangs-/Ausgangsschnittstelle 310 mit der Steuerung 305 des Rührers 302 und Steuerung 327 der Kühlanordnung 325 verbunden. Somit steuert der Rechner 309 die Rührfrequenz des Rührers 302 und die Kühlung der im Reaktor 300 bereits vorhandenen chemischen Substanz 301.

Der Rechner 309 ist ferner über die Eingangs-/Ausgangsschnittstelle 310 mit einer Tastatur 315, einer Computermaus 316 sowie einem Bildschirm 317 verbunden.

Der chemische Reaktor 300 wird mittels einer Zustandsbeschreibung beschrieben. Eine Eingangsgröße $x_t$, welche eine hochdimensionale Eingangsgröße ist und welche einen Zustand des chemischen Reaktors 300 zu einem Zeitpunkt t beschreibt, setzt sich in diesem Fall zusammen aus Angaben über die Konzentrationen von in der chemischen Substanz 301 enthaltenen chemischen Stoffe, den Temperaturen der einfließenden 303, der im Reaktor bereits enthaltenen 301 und der ausfließenden 304 Substanzen, eine Kühltemperatur der Kühlanordnung 325, dem in dem chemischen Reaktor 300 herrschenden Druck und der zu dem Zeitpunkt t eingestellten Rührfrequenz.

Ziel der im weiteren beschriebenen Modellierung des chemischen Reaktors 300 ist eine frühzeitige Bestimmung eines sogenannten kritischen Zustands in dem Reaktor 300. Unter einem kritischen Zustand wird ein Zustand des Reaktors 300 verstanden, bei dem die chemische Reaktionen im Reaktor 300 nicht mehr kontrollierbar und steuerbar sind.

Die Bestimmung eines kritischen Zustands wird unter Verwendung einer im folgenden beschriebenen Anordnung, mit welcher ein Zustand des chemischen Reaktors 300 durch ein Clustering-Verfahren bzw. ein Klassifizierungsverfahren klassifiziert wird. Als Klassen werden bei dem Klassifizierungsverfahren eine erste Klasse "es liegt ein kritischer Zustand vor" und eine zweite Klasse "es liegt kein kritischer Zustand vor" verwendet.

Unter Verwendung der für einen Zustand des chemischen Reaktors 300 ermittelten Klasse wird der chemische Reaktor 300 überwacht und gesteuert. Dazu werden in Abhängigkeit der ermittelten Klasse die Rührfrequenz des Rührers 302 und die Kühltemperatur der Kühlanordnung 325 verändert.

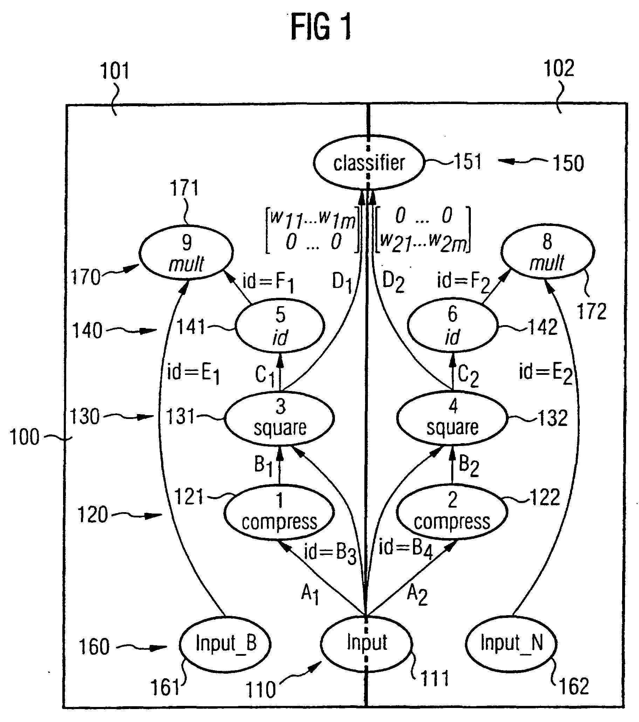

Die Klassifizierung eines Zustands des chemischen Reaktors 300 erfolgt unter Verwendung der im weiteren beschriebenen und in <u>Fig.1</u> dargestellten Anordnung.

Die im weiteren beschriebenen Skizzen sind jeweils so zu verstehen, daß jede Schicht bzw. jede Teilschicht eine vorgebbare Anzahl von Neuronen, d.h. Rechenelementen, aufweist.

Die jeweiligen Verbindungsmatrizen sind beliebiger Dimension und enthalten jeweils zu den entsprechenden Verbindungen zwischen den Neuronen der jeweiligen Schichten die Gewichtswerte.

Das in <u>Fig.1</u> dargestellte neuronale Netz 100 weist zwei in ihrer Struktur gleich aufgebaute Teilstrukturen 101 und 102 auf, wobei jede Teilstruktur 101 oder 102 einen Cluster bzw. Klasse, welche Klasse im Rahmen des Klassifizierungsverfahren verwendet wird, repräsentiert. Im allgemeinen werden eine einer Anzahl von Cluster bzw. Klassen entsprechende Zahl von Teilstrukturen verwendet.

Die Teilstrukturen 101 und 102 des neuronalen Netzes 100 sind jeweils durch eine gemeinsame erste Eingangsschicht 110 und eine gemeinsame Ausgangsschicht 150 miteinander gekoppelt. Eine Dimension einer an der gemeinsamen Ausgangsschicht abgreifbaren Ausgangsgröße entspricht der Anzahl der Teilstrukturen des neuronalen Netzes 100 bzw. der Anzahl der verwendeten Klassen.

Die Teilstruktur 101 bzw. 102 des neuronalen Netzes 100 weist jeweils die gemeinsame erste Eingangsschicht 110, drei versteckte Schichten 120, 130, 140, eine Multiplikationsschicht 170, eine zweite 161 bzw. dritte 162 Eingangsschicht und die gemeinsame Ausgangsschicht 150 auf. Die gemeinsame erste Eingangsschicht 110 und die drei versteckten Schichten der ersten bzw. der zweiten Teilstruktur entsprechen in ihrer Struktur jeweils einem Autoassoziator.

Im folgenden wird die Struktur des neuronalen Netzes 100 gemäß **Fig.1** genauer beschrieben.

Das in **Fig.1** dargestellte neuronale Netz 100 weist die gemeinsame erste Eingangsschicht 110 mit einer Teileingangsschicht 111 auf, die eine vorgebbare Anzahl Eingangs-Rechenelemente enthält. An die Eingangs-Rechenelemente ist eine Eingangsgröße $x_t$, welche Größen umfaßt, die einen Zustand eines Systems zu einem vorgebbaren Zeitpunkt t beschreiben, anlegbar sind.

Die Eingangs-Rechenelemente, d.h. Eingangsneuronen der Teileingangsschicht 111 der gemeinsamen ersten Eingangsschicht 110, sind über variable Verbindungen mit Neuronen einer vorgebbaren Anzahl versteckter Schichten 120 verbunden.

Die Verbindungen sind derart ausgestaltet, daß Neuronen der Teileingangsschicht 111 der gemeinsamen ersten Eingangsschicht 110 jeweils mit Neuronen einer ersten versteckten Schicht 121 gemäß einer durch eine erste Verbindungsmatrix $A_1$ gegebenen Struktur und mit Neuronen einer zweiten versteckten Schicht 122 gemäß einer durch eine zweite Verbindungsmatrix $A_2$ gegebenen Struktur verbunden sind.

Neuronen einer dritten versteckten Schicht 131 sind mit ihren Eingängen mit Ausgängen von den Neuronen der ersten versteckten Schicht 121 gemäß einer durch eine dritte Verbindungsmatrix $B_1$ gegebenen Struktur verbunden. Ferner sind die Eingänge der Neuronen der dritten verdeckten Schicht 131 mit Ausgängen der Neuronen der Teileingangsschicht 111 der gemeinsamen ersten Eingangsschicht 110 gemäß einer durch eine vierte Verbindungsmatrix $B_3$ gegebenen Struktur verbunden.

Neuronen einer vierten versteckten Schicht 132 sind mit ihren Eingängen mit Ausgängen von den Neuronen der zweiten versteckten Schicht 122 gemäß einer durch eine fünfte Verbindungsmatrix $B_2$ gegebenen Struktur verbunden. Ferner sind die Eingänge der Neuronen der fünften verdeckten Schicht 132 mit Ausgängen der Neuronen der Teileingangsschicht 111 der gemeinsamen ersten Eingangsschicht 110 gemäß einer durch eine sechste Verbindungsmatrix $B_4$ gegebenen Struktur verbunden.

Die vierte Verbindungsmatrix $B_3$ und die sechste Verbindungsmatrix $B_4$ sind jeweils eine negative Identitätsmatrix -Id. Durch eine solche Festlegung der vierten Verbindungsmatrix $B_3$ und der sechsten Verbindungsmatrix $B_4$ wird jeweils gewährleistet, daß in der dritten versteckten Schicht 131 und der vierten versteckten Schicht 132 jeweils eine Abweichung von in der dritten versteckten Schicht 131 und der vierten versteckten Schicht 132 vorliegenden Größen zu der Eingangsgröße gebildet wird.

Ferner sind Neuronen einer fünften versteckten Schicht 141 mit ihren Eingängen gemäß einer durch die siebte Verbindungsmatrix $C_1$ gegebenen Struktur mit Ausgängen von Neuronen der dritten versteckten Schicht 131 verbunden.

Neuronen einer sechsten versteckten Schicht 142 sind mit ihren Eingängen gemäß einer durch die achte Verbindungsmatrix $C_2$ gegebenen Struktur mit Ausgängen von Neuronen der vierten versteckten Schicht 132 verbunden.

Die siebte Verbindungsmatrix $C_1$ und die achte Verbindungsmatrix $C_2$ sind jeweils derart ausgestaltet, daß ein durch die dritte versteckte Schicht 131 repräsentierter Zustand und ein durch die vierte versteckte Schicht 132 repräsentierter Zustand jeweils auf einen eindimensionalen Zustand abgebildet werden.

Die gemeinsame Ausgangsschicht 150 weist eine Teilausgangsschicht 151 auf. Eingänge von Neuronen der Teilausgangsschicht 151 der gemeinsamen Ausgangsschicht 150 sind jeweils gemäß einer durch eine erste Ausgangs-Verbindungsmatrix $D_1$ gegebenen Struktur mit den Ausgängen der Neuronen der dritten versteckten Schicht 131 und gemäß einer durch eine zweite Ausgangs-Verbindungsmatrix $D_2$ gegebenen Struktur mit den Ausgängen der Neuronen der vierten versteckten Schicht 132 verbunden.

An den Neuronen der Teilausgangsschicht 151 der gemeinsamen Ausgangsschicht 150 ist eine Ausgangsgröße $s_t$ abgreifbar. Die Dimension der Ausgangsgröße $s_t$ entspricht der Anzahl von den Teilstrukturen des neuronalen Netzes. Dies wird dadurch gewährleistet, daß die erste Ausgangs-Verbindungsmatrix $D_1$ und die zweite Ausgangs-Verbindungsmatrix $D_2$ jeweils derart gewählt werden, daß unter Verwendung der Ausgangsmatrizen $D_1$ und $D_2$ ein durch die dritte versteckte Schicht 131 repräsentierten Zustand und ein durch die vierte versteckte Schicht 132 repräsentierten Zustand jeweils auf einen eindimensionalen Zustand abgebildet werden. Diese eindimensionalen Zustände werden in der gemeinsamen Ausgangsschicht 150 zusammengeführt.

Ferner umfaßt die in **Fig.1** dargestellte Anordnung eine zweite Eingangsschicht 161 und einer dritte Eingangsschicht 162.

Ausgänge von Neuronen der zweiten Eingangsschicht 161 sind gemäß einer durch eine neunte Verbindungsmatrix $E_1$ gegebenen Struktur mit Eingängen von Neuronen einer siebten Schicht 171, einer sogenannten Multiplikationsschicht, verbunden. Zusätzlich sind die Eingänge der Neuronen der siebten Schicht 171 gemäß einer durch eine zehnten Verbindungsmatrix $F_1$ gegebenen Struktur mit den Ausgängen der Neuronen der fünften versteckten Schicht 141 verbunden. Unter Verwendung der siebten Schicht 171 erfolgt eine Abbildung derart, daß Zustände, welche durch die zweite Eingangsschicht und durch die fünfte versteckte Schicht 141 repräsentiert werden, miteinander multipliziert werden.

Ausgänge von Neuronen der dritten Eingangsschicht 162 sind gemäß einer durch eine elfte Verbindungsmatrix $E_2$ gegebenen Struktur mit Eingängen von Neuronen einer achten Schicht 172, einer sogenannten Multiplikationsschicht, verbunden. Zusätzlich sind die Eingänge der Neuronen der achten Schicht 172 gemäß einer zwölften Verbindungsmatrix $F_2$ gegebenen Struktur mit den Ausgängen der Neuronen der sechsten versteckten Schicht 142 verbunden. Unter Verwendung der achten Schicht 172 erfolgt eine Abbildung derart, daß Zustände, welche durch die dritte Eingangsschicht und durch die sechste versteckte Schicht 142 repräsentiert werden, miteinander multipliziert werden.

Die neunte Verbindungsmatrix $E_1$, zehnte Verbindungsmatrix $F_1$, elfte Verbindungsmatrix $E_2$ sowie die zwölfte Verbindungsmatrix $F_2$ sind jeweils eine Identitätsmatrix Id.

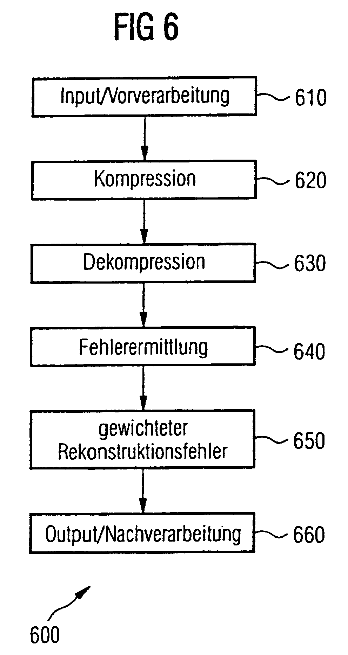

Zur besseren Veranschaulichung der durch die Anordnung erreichten Transformationen ist in **Fig.6** ein Ablauf von Verfahrensschritten 600 dargestellt.

In einem ersten Schritt 610 werden Größen einer Eingangsgröße $x_t$, welche Größen einen Zustand eines Systems in einem ersten Raum X beschreiben, gemessen und zu der Eingangsgröße $x_t$ gruppiert (Input/Vorverarbeitung).

In einem zweiten Schritt 620 wird die Eingangsgröße $x_t$ von dem ersten Raum X in einen ersten inneren Zustandsraum $S_1$ und auch in einen zweiten inneren Zustandsraum $S_2$ transformiert (Kompression).

In einem dritten Schritt 630 werden die transformierten Eingangsgrößen von dem ersten inneren Zustandsraum $S_1$ und dem zweiten inneren Zustandsraum $S_2$ jeweils in den ersten Raum X zurücktransformiert (Dekompression).

In einem vierten Schritt 640 werden unter Verwendung der Eingangsgröße $x_t$ und der ersten zurücktransformierten Eingangsgröße bzw. der Eingangsgröße $x_t$ und der zweiten zurücktransformierten Eingangsgröße eine erste bzw. eine zweite Abweichung ermittelt (Fehlerermittlung).

In einem fünften Schritt 650 werden unter Verwendung der ersten und der zweiten Abweichung jeweils ein sogenannter erster und zweiter gewichteter Rekonstruktionsfehler eines Autoassoziators ermittelt derart, daß die erste und die zweite Abweichung jeweils gewichtet in einen dritten Raum Y transformiert werden. Die Transformation in den dritten Raum erfolgt derart, daß der erster und der zweiter gewichtete Rekonstruktionsfehler jeweils eine eindimensionale Größe ist (gewichteter Rekonstruktionsfehler = Wahrscheinlichkeit einer Zugehörigkeit der Eingangsgröße $x_t$ zu einem Cluster).

Die Ermittlung des gewichteten Rekonstruktionsfehlers des Autoassoziators erfolgt nach folgender Vorschrift:

$$p(x_t \in \text{Klasse}_i) = \frac{e^{-(x_t - A_i(x_t))^T * (-W_i) * (x_t - A_i(x_t))}}{\displaystyle\sum_{j=1}^{n} e^{-(x_t - A_j(x_t))^T * (-W_j) * (x_t - A_j(x_t))}}$$

mit:

| | |
|---|---|
| i | Index für eine Klasse |
| j | Variable |
| n | Anzahl der Klassen (hier: 2) |
| $x_t$ | Eingangsgröße |
| $e^{(\cdots)}$ | Exponentialfunktion |
| $(\ldots)^T$ | Transponierte einer Matrix |
| $W_i$ bzw. $W_j$ | Gewichtungsmatrix |
| $A_i$ bzw. $A_j$ | zurücktransformierte Eingangsgröße |
| $p(x_t \varepsilon \text{Klasse}_i)$ | gewichteter Rekonstruktionsfehlers des |

Autoassoziators für die Eingangsgröße $x_t$ (= Wahrscheinlichkeit einer Zugehörigkeit der Eingangsgröße $x_t$ zur Klasse i)

In einem sechsten Schritt 660 werden der erste und der zweite gewichtete Rekonstruktionsfehler zu einer Ausgangsgröße $s_t$ zusammengefaßt (Output/Nachverarbeitung).

**Training der Anordnung gemäß dem ersten Ausführungsbeispiel**

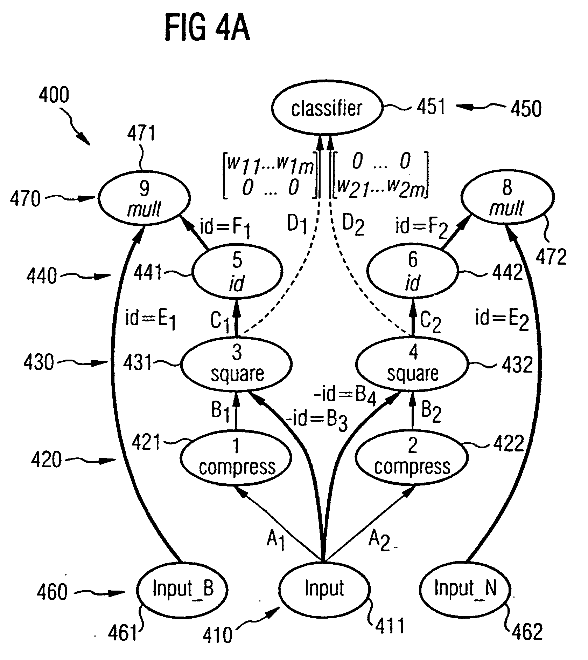

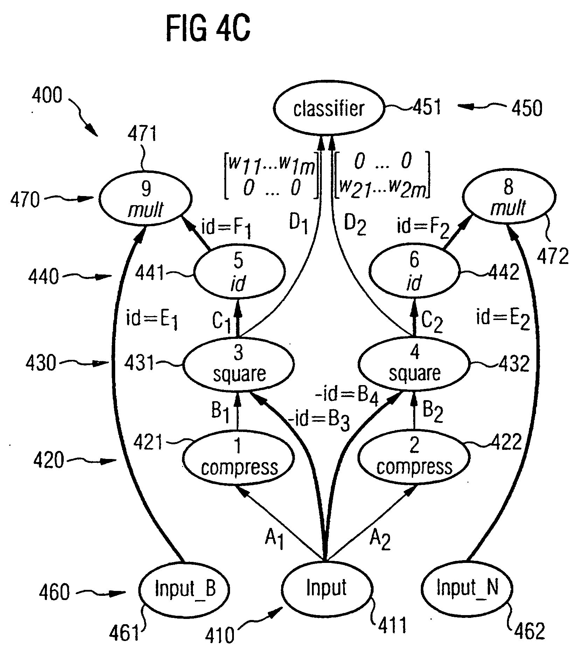

Ein Training der Anordnung (vgl. **Fig.4a-c**) wird im Rahmen eines Trainingsverfahrens, welches drei Schritte (vgl. **Fig.4ac**) aufweist, durchgeführt. Als Trainingsverfahren wird jeweils das Backpropagation-Verfahren eingesetzt. Ein erster, zweiter und dritter Trainingsdatensatz für entsprechend dem ersten, zweiten und dritten Trainingsschritt werden jeweils auf nachfolgend beschriebene Weise aus dem chemischen Reaktor 300 gewonnen.

Unter Verwendung der entsprechenden Meßmittel in dem chemischen Reaktor 300 werden mehrere Zustände des chemischen Reaktors zu verschiedenen Zeitpunkten t bestimmt, wobei jeweils ein Zustand des chemischen Reaktors zu einem Zeitpunkt t ein Trainingsdatum darstellt. Mehrere Trainingsdaten werden zu einem Trainingsdatensatz zusammengefaßt.

Für ein Trainingsdatum werden die Konzentrationen von den in der chemischen Substanz 301 enthaltenen chemischen Stoffe, die Temperaturen der einfließenden 303, der im Reaktor bereits enthaltenen 301 und der ausfließenden 304 Substanzen, die Kühltemperatur der Kühlanordnung 325, der in dem chemischen Reaktor 300 herrschenden Druck und der zu dem Zeitpunkt t eingestellten Rührfrequenz gemessen und zu einem Trainingsvektor gruppiert.

Im Rahmen des Trainings und der Trainingsschritte werden Verbindungen zwischen Neuronen eingefroren und/oder gelöst. Die entsprechenden Anordnungen sind in den **Fig.4a-c** dargestellt. Dabei bedeutet eine eingefrorene Neuronenverbindung, daß Gewichte dieser Neuronenverbindung während des entsprechenden Trainingsschrittes unverändert bleiben. Eine eingefrorene Verbindungen ist in den **Fig.4a-c** durch eine dick gezeichnete Pfeilverbindung hervorgehoben dargestellt.

Eine gelöste Neuronenverbindung bedeutet, daß in dem entsprechenden Trainingsschritt keine Signale zwischen den verbundenen Neuronen übertragen werden. Dies kann dadurch realisiert werden, daß die Neuronenverbindung in dem entsprechenden Trainingsschritt unterbrochen wird oder daß Gewichte der gelösten Verbindung in dem entsprechenden Trainingsschritt auf Null gesetzt werden. Eine gelöste Neuronenverbindung ist in den **Fig.4a-c** durch eine gestrichelt gezeichnete Pfeilverbindung hervorgehoben dargestellt.

**Erster Trainingsschritt**

In **Fig.4a** ist die Anordnung gemäß **Fig.1,** wie sie in dem ersten Trainingsschritt trainiert wird, dargestellt. In dem ersten Trainingsschritt werden jeweils die erste Teilstruktur und die zweite Teilstruktur getrennt voneinander trainiert (Training der Autoassoziatoren). Als Targetgrößen für das Training werden in der siebten Schicht 471 und der achten Schicht 472 jeweils der Wert Null verwendet.

Das getrennte Training der ersten und der zweiten Teilstruktur wird derart durchgeführt, daß in Abhängigkeit der Zugehörigkeit eines Trainingsdatums des ersten Trainingsdatensatzes zu der ersten oder zu der zweiten Klasse jeweils nur die entsprechende Teilstruktur trainiert wird. Dazu werden entsprechende Eingangsgrößen, welche gewährleisten, daß nur jeweils für die zu trainierende Teilstruktur Fehlersignale erzeugt werden, an die zweite Eingangsschicht 461 und an die dritte Eingangsschicht 462 angelegt werden.

Bei dem ersten Trainingsschritt werden die Neuronenverbindungen von der ersten versteckten Schicht 431 und der vierten versteckten Schicht 432 jeweils zu der Teilausgangsschicht 451 der gemeinsamen Ausgangsschicht 450 gelöst.

Darüber hinaus werden bei der ersten Teilstruktur jeweils die Neuronenverbindungen zwischen der ersten Teileingangsschicht 411 der gemeinsamen Eingangsschicht 410 und der dritten versteckten Schicht 431, der dritten versteckten Schicht 431 und der fünften versteckten Schicht 451, der fünften versteckten Schicht 441 und der siebten Schicht 471 sowie der zweiten Eingangsschicht 461 und der siebten Schicht 471 eingefroren. Die Neuronenverbindungen der zweiten Teilstruktur sind entsprechend der ersten Teilstruktur eingefroren.

**Zweiter Trainingsschritt**

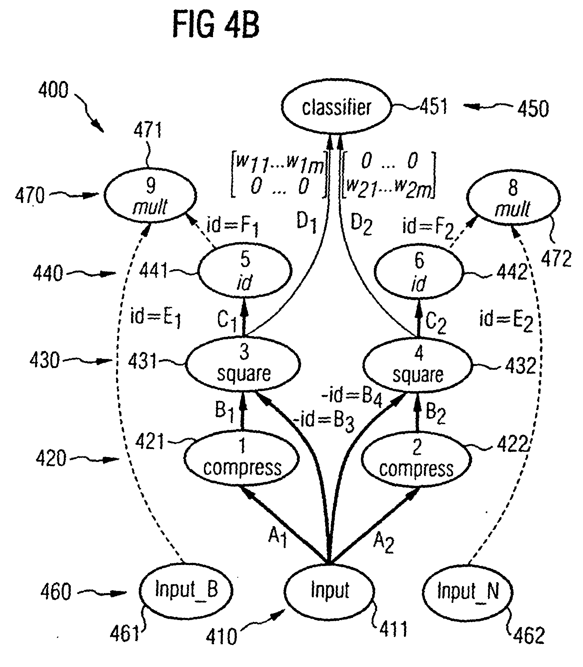

In **Fig.4b** ist die Anordnung gemäß **Fig.1,** wie sie in dem zweiten Trainingsschritt trainiert wird, dargestellt. In dem zweiten Trainingsschritt wird die Klassifizierung (Clustering) unter Verwendung des zweiten Trainingsdatensatzes trainiert.

Bei dem zweiten Trainingsschritt werden bei der ersten Teilstruktur jeweils die Neuronenverbindung zwischen der Teileingangsschicht 411 der ersten gemeinsamen Eingangsschicht 410 und der ersten versteckten Schicht 421, der Teileingangsschicht 411 der ersten gemeinsamen Eingangsschicht 410 und der dritten versteckten Schicht 431, der ersten versteckten Schicht 421 und der dritten versteckten Schicht 431, der dritten versteckten Schicht 431 und der fünften versteckten Schicht 451 eingefroren. Die Neuronenverbindungen der zweiten Teilstruktur sind entsprechend der ersten Teilstruktur eingefroren.

Ferner sind bei der ersten Teilstruktur die Neuronenverbindungen zwischen der zweiten Eingangsschicht 461 und der siebten Schicht 471 sowie die Neuronenverbindungen zwischen der fünften versteckten Schicht 441 und der siebten Schicht 471 gelöst. Entsprechendes gilt für die zweite Teilstruktur.

**Dritter Trainingsschritt**

In **Fig.4c** ist die Anordnung gemäß **Fig.1,** wie sie in dem dritten Trainingsschritt trainiert wird, dargestellt. In dem dritten Trainingsschritt wird unter Verwendung des dritten Trainingsdatensatzes ein Zusammenwirken der ersten und der zweiten Teilstruktur sowie die Klassifizierung trainiert.

Bei dem dritten Trainingsschritt sind keine Neuronenverbindungen gelöst.

Ferner sind bei dem dritten Trainingsschritt bei der ersten Teilstruktur die Neuronenverbindungen zwischen der Teileingangsschicht 411 der gemeinsamen ersten Eingangsschicht 410 und der dritten versteckten Schicht 431, der dritten versteckten Schicht 431 und der fünften versteckten Schicht 441, der fünften versteckten Schicht 441 und der siebten Schicht 471 sowie der zweiten Eingangsschicht 461 und der siebten Schicht 471 eingefroren. Die Neuronenverbindungen der zweiten Teilstruktur sind entsprechend der ersten Teilstruktur eingefroren.

Es ist anzumerken, daß für die drei Trainingsschritte auch ein einziger Trainingsdatensatz verwendet werden kann. Die drei Trainingsschritte werden entsprechend den obigen Ausführungen durchgeführt.

Die gemäß dem oben beschriebenen Trainingsverfahren trainierte Anordnung gemäß **Fig.1** wird zur Klassifizierung eines Zustands des chemischen Reaktors 300 eingesetzt. Als Klassen werden bei dem Klassifizierungsverfahren die erste Klasse "es liegt ein kritischer Zustand vor" und die zweite Klasse "es liegt kein kritischer Zustand vor" verwendet.

Die Klassifizierung eines Zustandes des chemischen Reaktors 300 erfolgt derart, daß für einen Zustand des chemischen Reaktors 300 zu einem Zeitpunkt t die Konzentrationen von den in der chemischen Substanz 301 enthaltenen chemischen Stoffe, die Temperaturen der einfließenden 303, der im Reaktor bereits enthaltenen 301 und der ausfließenden 304 Substanzen, die Kühltemperatur der Kühlanordnung 325, der in dem chemischen Reaktor 300 herrschenden Druck und der zu dem Zeitpunkt t eingestellten Rührfrequenz gemessen und zu einem Anwendungsvektor gruppiert werden.

Der Anwendungsvektor wird als die Eingangsgröße $x_t$ an die trainierte Anordnung gemäß **Fig.1** angelegt. Unter Verwendung der trainierten Anordnung wird die Ausgangsgröße $s_t$, welche Ausgangsgröße entsprechend der zwei Klassen eine zweidimensionale Ausgangsgröße ist, ermittelt.

Ein erster Wert der Ausgangsgröße $s_t$ gibt eine Wahrscheinlichkeit der Zugehörigkeit des Zustands des chemischen Reaktors 300 zu der ersten Klasse an. Ein zweiter Wert der Ausgangsgröße $s_t$ gibt eine Wahrscheinlichkeit der Zugehörigkeit des Zustands zu der zweiten Klasse an. Unter Verwendung des ersten Wertes erfolgt die Zuordnung zu einer Klasse derart, daß der Zustand der ersten Klasse zugeordnet wird, wenn der erste Wert über einem vorgegebenen Schwellwert liegt. Andernfalls wird der Zustand der zweiten Klasse zugeordnet.

Unter Verwendung der für den Zustand des chemischen Reaktors 300 ermittelten Klasse wird der chemische Reaktor 300 überwacht und gesteuert. Dazu werden in Abhängigkeit der ermittelten Klasse die Rührfrequenz des Rührers 302 und die Kühltemperatur der Kühlanordnung 325 verändert.

**2. Ausführungsbeispiel: Kundenklassifikation**

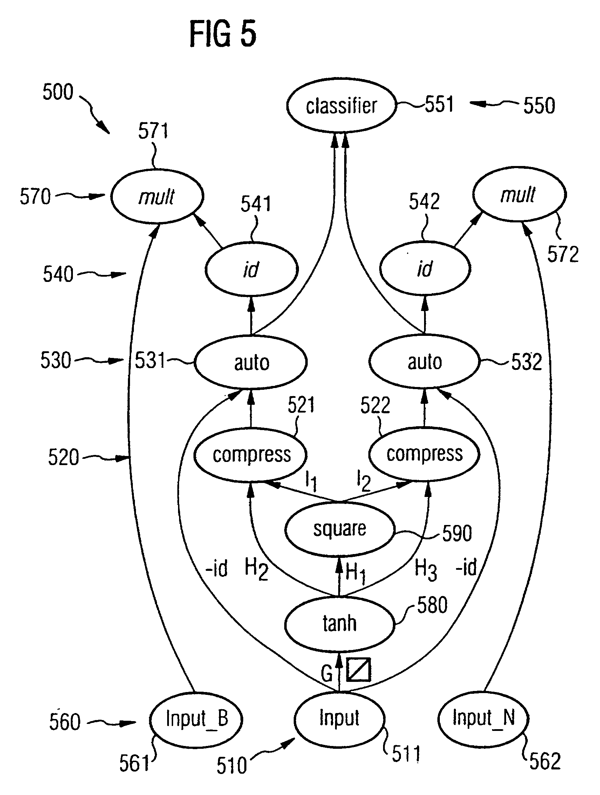

In **Fig.5** ist eine Anordnung zu einer Kundenklassifikation dargestellt, welche Anordnung eine Erweiterung der im Rahmen des ersten Ausführungsbeispiels beschrieben Anordnung zur Klassifizierung eines Zustands in einem chemischen Reaktor(vgl. **Fig.1**) ist.

Unter einer Kundenklassifikation wird ein Verfahren verstanden, mit welchem eine ausgewählte Person dahingehend klassifiziert wird, ob die ausgewählte Person einer ersten Klasse "Kunde" oder einer zweiten Klasse "kein Kunde" angehört. Im Rahmen des Verfahrens wird die ausgewählte Person durch Eigenschaften beschrieben.

Die Eigenschaften einer ausgewählten Person umfassen Angaben über ein Geschlecht, ein Alter, eine Ausbildung, einen Wohnort und ein Jahreseinkommen der beobachteten Person.

Die Eigenschaften werden durch numerische Werte, welche Werte sowohl nominale, ordinale als auch kontinuierliche Werte sind, beschrieben.

Die Eigenschaften sind jeweils für mehrere auszuwählende Personen in einer Datenbank gespeichert.

Eine Eingangsgröße $x_t$, die an die Anordnung zur Kundenklassifikation angelegt wird, setzt sich aus den Eigenschaften einer ausgewählten Person zusammen derart, daß die Eigenschaften der ausgewählten Person zu einem Vektor gruppiert werden. Dazu wird eine Person ausgewählt und die entsprechenden Eigenschaften der ausgewählten Person aus der Datenbank ausgelesen. Die entsprechenden Eigenschaften werden zu der Eingangsgröße $x_t$ gruppiert.

Ziel der im weiteren beschriebenen Kundenklassifikation ist eine Zuordnung einer ausgewählten Person zu der ersten Klasse "Kunde" oder zu der zweiten Klasse "kein Kunde".

Die Ermittlung einer Zugehörigkeit zu der ersten Klasse oder zu der zweiten Klasse erfolgt unter Verwendung der im weiteren beschriebenen und in **Fig.5** dargestellten Anordnung.

Da die Anordnung gemäß **Fig.5** eine Erweiterung der Anordnung gemäß **Fig.1** ist, gelten die im Rahmen des ersten Ausführungsbeispiels gemachten Ausführungen hinsichtlich der beschriebenen Anordnung sowie des der Anordnung zugrunde liegenden Prinzips, des beschriebenen Verfahrens im Rahmen der Anwendung der Anordnung und des Trainingsverfahrens entsprechend für die erweiterte Anordnung gemäß **Fig.5.**

Dementsprechend sind Komponenten aus den **Fig.1** und **Fig.5** bei gleicher Ausgestaltung mit gleichen Bezugszeichen versehen.

Zusätzlich weist die Anordnung zur Kundenklassifikation eine neunte versteckte Schicht 580 und eine zehnte versteckte Schicht 590 auf.

Die neunte versteckte Schicht 580 ist derart angeordnet, daß die Ausgänge der Neuronen der Teileingangsschicht 511 der gemeinsamen ersten Eingangsschicht mit Eingängen von Neuronen der neunten versteckten Schicht gemäß einer durch eine dreizehnte Verbindungsmatrix G gegebenen Struktur verbunden sind.

Ausgänge von Neuronen der neunten versteckten Schicht 580 sind mit Eingängen von Neuronen der zehnten versteckten Schicht 590 gemäß einer durch eine vierzehnten Verbindungsmatrix $H_1$ gegebenen Struktur verbunden.

Die vierzehnte Verbindungsmatrix $H_1$ ist die Identitätsmatrix.

Ferner sind die Ausgänge der Neuronen der neunten versteckten Schicht 580 jeweils mit den Eingängen der Neuronen der ersten versteckten Schicht 521 gemäß einer durch eine fünf zehnte Verbindungsmatrix $H_2$ gegebenen Struktur verbunden und mit den Eingängen der Neuronen der zweiten versteckten Schicht 522 gemäß einer durch eine sechzehnten Verbindungsmatrix $H_3$ gegebenen Struktur verbunden.

Ausgänge von Neuronen der zehnten versteckten Schicht 590 sind jeweils mit den Eingängen der Neuronen der ersten versteckten Schicht 521 gemäß einer durch eine siebzehnte Verbindungsmatrix $I_1$ gegebenen Struktur verbunden und mit den Eingängen der Neuronen der zweiten versteckten Schicht 522 gemäß einer durch eine achtzehnte Verbindungsmatrix $I_2$ gegebenen Struktur verbunden.

Die ursprünglichen Verbindungen der Teileingangsschicht 511 der gemeinsamen ersten Eingangsschicht 510 mit der ersten versteckten Schicht 521 und der zweiten versteckten Schicht 522 gemäß **Fig.1** sind jeweils gelöst.

Unter Verwendung der dreizehnten Verbindungsmatrix G und der neunten versteckten Schicht 580 wird ein "Netzinternes Preprozessing" (beispielsweise eine Fehleranalyse) durchgeführt. Unter dem "Netzinternen Preprozessing" wird eine Bearbeitung einer Eingangsgröße $x_t$ nach dem Anlegen der Eingangsgröße $x_t$ an die Teileingangsschicht 511 der gemeinsamen ersten Eingangsschicht 510 verstanden.

Bei der Realisierung des "Netzinternen Preprozessings" ist die dreizehnte Verbindungsmatrix G eine Diagonalmatrix, deren Diagonalwerte die Parameter $g_i$ sind.

Die Anordnung gemäß **Fig.5** wird, wie beschrieben, zur Klassifizierung einer ausgewählten Person, die durch Eigenschaften beschrieben wird, als Kunde oder als kein Kunde eingesetzt. Als Klassen werden bei dem Klassifizierungsverfahren die erste Klasse "Kunde" und die zweite Klasse "kein Kunde" verwendet.

Ein Anwendungsvektor, der die Eigenschaften eines zu klassifizierenden Person umfaßt, wird als die Eingangsgröße $x_t$ an die Anordnung angelegt. Unter Verwendung der Anordnung wird die Ausgangsgröße $s_t$, welche Ausgangsgröße entsprechend der zwei Klassen eine zweidimensionale Ausgangsgröße ist, ermittelt.

Ein erster Wert der Ausgangsgröße $s_t$ gibt eine Wahrscheinlichkeit einer Zugehörigkeit der zu klassifizierenden Person zu der ersten Klasse an. Ein zweiter Wert der Ausgangsgröße $s_t$ gibt eine Wahrscheinlichkeit einer Zugehörigkeit der zu klassifizierenden Person zu der zweiten Klasse an. Unter Verwendung des ersten Wertes erfolgt die Zuordnung zu der ersten oder zweiten Klasse derart, daß die zu klassifizierende Person der ersten Klasse zugeordnet wird, wenn der erste Wert über einem vorgegebenen Schwellwert liegt. Andernfalls wird die zu klassifizierende Person der zweiten Klasse zugeordnet.

Unter Verwendung der für eine klassifizierte Person ermittelten Klasse werden nachfolgend automatisierte Bearbeitungsschritte gesteuert. So werden Kundendaten, beispielsweise eine Adresse, von als "Kunde" klassifizierten Personen an eine Kouvertierungsmaschine übertragen. Die Kouvertierungsmaschine bedruckt vorgefertigte Werbebriefe mit den übertragenen Kundendaten.

Im folgenden wird eine Alternative des zweiten Ausführungsbeispiels angegeben.

Die Kundendaten von als "Kunde" klassifizierten Personen können auch an ein elektronisches Nachrichtensystem, beispielsweise ein e-mail System, übertragen werden. Das elektronische Nachrichtensystem erstellt unter Verwendung der Kundendaten elektronische Briefe und sendet die elektronischen Briefe über ein Kommunikationsnetz, beispielsweise ein Internet, automatisch an die entsprechenden Personen.

Sind die erste Klasse "Kunde" und die zweite Klasse "kein Kunde" sehr stark "unbalanced", d.h. die zweite Klasse "kein Kunde" ist sehr viel größer als die erste Klasse "Kunde", kann die Genauigkeit der Klassifizierung derart erhöht werden, daß die Anordnung gemäß **Fig.5** derart angepaßt wird, daß das "Netzinterne Preprozessing" sowohl in der ersten als auch in der zweiten Teilstruktur durchgeführt wird. Dazu werden die neunte versteckte Schicht 580 und die zehnte versteckte Schicht 590 jeweils in die erste und die zweite Teilstruktur integriert.

Im weiteren ist eine mögliche Realisierung des oben beschriebenen zweiten Ausführungsbeispiels angegeben für das Programm SENN, Version 2.3. Die Realisierung umfaßt drei Abschnitte, die jeweils einen Programmcode enthalten, die zur Verarbeitung in SENN, Version 2.3 erforderlich sind.

**1. Parameter-Datei:**

**Phase 1:**

```
BpNet {
 Globals {
  WtPenalty {
   sel NoPenalty
   Weigend {
     Lambda { 0.000000 }
     AutoAdapt { T }
     w0 { 1.000000 }
     DeltaLambda { 0.000001 }
     ReducFac { 0.900000 }
     Gamma { 0.900000 }
     DesiredError { 0.000000 }
   }
   WtDecay {
     Lambda { 0.001000 }
     AutoAdapt { F }
     AdaptTime { 10 }
     EpsObj { 0.001000 }
     ObjSet { Training }
     EpsilonFac { 1.000000 }
   }
   ExtWtDecay {
     Lambda { 0.001000 }
     AutoAdapt { F }
     AdaptTime { 10 }
     EpsObj { 0.001000 }
     ObjSet { Training }
     EpsilonFac { 1.000000 }
   }
```

```
Finnoff {
  AutoAdapt { T }
  Lambda { 0.000000 }
  DeltaLambda { 0.000001 }
  ReducFac { 0.900000 }
  Gamma { 0.900000 }
  DesiredError { 0.000000 }
  }
}
ErrorFunc {
 sel none
 |x| {
   parameter { 0.050000 }
  }
  LnCosh {
   parameter { 1.000000 }
  }
}
AnySave {
 file_name { f.Globals.dat }
}
AnyLoad {
 file_name { f.Globals.dat }
}
ASCII { F }
}
LearnCtrl {
 sel Stochastic
 Stochastic {
  PatternSelection {
   sel Permute
   SubSample {
    Percent { 0.500000 }
   }
   ExpRandom {
    Lambda { 2.000000 }
   }
  }
  WtPruneCtrl {
   PruneSchedule {
   sel FixSchedule
   FixSchedule {
    Limit_0 { 10 }
    Limit_1 { 10 }
    Limit_2 { 10 }
    Limit_3 { 10 }
    RepeatLast { T }
   }
   DynSchedule {
    MaxLength { 4 }
    MinimumRuns { 0 }
    Training { F }
    Validation { T }
    Generalization { F }
   }
   DivSchedule {
    Divergence { 0.100000 }
    MinEpochs { 5 }
```

```
          }
        }
        PruneAlg {
         sel FixPrune
          FixPrune {
            Perc_0 { 0.100000 }
            Perc_1 { 0.100000 }
            Perc_2 { 0.100000 }
            Perc_3 { 0.100000 }
          }
          EpsiPrune {
            DeltaEps { 0.050000 }
            StartEps { 0.050000 }
            MaxEps { 1.000000 }
            ReuseEps { F }
          }
        }
        Tracer {
          Active { F }
          Set { Validation }
          File { trace }
        }
        Active { F }
        Randomize { 0.000000 }
        PruningSet { Training }
        Method { S-Pruning }
      }
      StopControl {
        EpochLimit {
          Active { F }
          MaxEpoch { 60 }
        }
        MovingExpAverage {
          Active { F }
          MaxLength { 4 }
          Training { F }
          Validation { T }
          Generalization { F }
          Decay { 0.900000 }
        }
        CheckObjectiveFct {
          Active { F }
          MaxLength { 4 }
          Training { F }
          Validation { T }
          Generalization { F }
        }
        CheckDelta {
          Active { F }
          Divergence { 0.100000 }
        }
      }
      EtaCtrl {
        Mode {
         sel EtaSchedule
          EtaSchedule {
            SwitchTime { 10 }
            ReductFactor { 0.950000 }
```

```
        }
        FuzzCtrl {
          MaxDeltaObj { 0.300000 }
          MaxDelta2Obj { 0.300000 }
          MaxEtaChange { 0.020000 }
          MinEta { 0.001000 }
          MaxEta { 0.100000 }
          Smoother { 1.000000 }
        }
      }
      Active { F }
    }
    LearnAlgo {
     sel OnlineBackProp
      VarioEta {
        MinCalls { 200 }
      }
      MomentumBackProp {
        Alpha { 0.050000 }
      }
      Quickprop {
        Decay { 0.050000 }
        Mu { 2.000000 }
      }
    }
    AnySave {
      file_name { f.Stochastic.dat }
    }
    AnyLoad {
      file_name { f.Stochastic.dat }
    }
    BatchSize { 1 }
    Eta { 0.001000 }
    DerivEps { 0.000000 }
  }
  TrueBatch {
    PatternSelection {
     sel Sequential
      SubSample {
        Percent { 0.500000 }
      }
      ExpRandom {
        Lambda { 2.000000 }
      }
    }
    WtPruneCtrl {
      Tracer {
        Active { F }
        Set { Validation }
        File { trace }
      }
      Active { F }
      Randomize { 0.000000 }
      PruningSet { Training }
      Method { S-Pruning }
    }
    EtaCtrl {
      Active { F }
```

```
   }
LearnAlgo {
 sel VarioEta
  VarioEta {
    MinCalls { 200 }
  }
  MomentumBackProp {
   Alpha { 0.050000 }
  }
  Quickprop {
   Decay { 0.050000 }
   Mu { 2.000000 }
  }
 }
 AnySave {
  file_name { f.TrueBatch.dat }
 }
 AnyLoad {
  file_name { f.TrueBatch.dat }
 }
 Eta { 0.050000 }
 DerivEps { 0.000000 }
}
LineSearch {
 PatternSelection {
  sel Sequential
   SubSample {
    Percent { 0.500000 }
   }
   ExpRandom {
    Lambda { 2.000000 }
   }
 }
 WtPruneCtrl {
  Tracer {
   Active { F }
   Set { Validation }
   File { trace }
  }
  Active { F }
  Randomize { 0.000000 }
  PruningSet { Training }
  Method { S-Pruning }
 }
 LearnAlgo {
  sel ConjGradient
   VarioEta {
    MinCalls { 200 }
   }
   MomentumBackProp {
    Alpha { 0.050000 }
   }
   Quickprop {
    Decay { 0.050000 }
    Mu { 2.000000 }
   }
   Low-Memory-BFGS {
    Limit { 10 }
```

```
        }
      }
      AnySave {
        file_name { f.LineSearch.dat }
      }
      AnyLoad {
        file_name { f.LineSearch.dat }
      }
      EtaNull { 1.000000 }
      MaxSteps { 10 }
      LS_Precision { 0.500000 }
      TrustRegion { T }
      DerivEps { 0.000000 }
      BatchSize { 2147483647 }
    }
  GeneticWeightSelect {
    PatternSelection {
     sel Sequential
      SubSample {
        Percent { 0.500000 }
      }
      ExpRandom {
        Lambda { 2.000000 }
      }
    }
    LearnAlgo {
     sel VarioEta
      VarioEta {
        MinCalls { 200 }
      }
      MomentumBackProp {
       Alpha { 0.050000 }
      }
    }
    ObjFctTracer {
      Active { F }
      File { objFunc }
    }
    SearchControl {
      SearchStrategy {
       sel HillClimberControl
        HillClimberControl {
          %InitialAlive { 0.950000 }
          InheritWeights { T }
          Beta { 0.100000 }
          MutationType { MacroMutation }
          MaxTrials { 50 }
        }
        PBILControl {
          %InitialAlive { 0.950000 }
          InheritWeights { T }
          Beta { 0.100000 }
          Alpha { 0.100000 }
          PopulationSize { 40 }
        }
        PopulationControl {
          pCrossover { 1.000000 }
          CrossoverType { SimpleCrossover }
```

```
            Scaling { T }
            ScalingFactor { 2.000000 }
            Sharing { T }
            SharingFactor { 0.050000 }
            PopulationSize { 50 }
            min.%InitialAlive { 0.010000 }
            max.%InitialAlive { 0.100000 }
          }
        }
        pMutation { 0.000000 }
      }
      ObjectiveFunctionWeights {
        %Alive { 0.600000 }
        E(TS) { 0.200000 }
        Improvement(TS) { 0.000000 }
        E(VS) { 1.000000 }
        Improvement(VS) { 0.000000 }
        (E(TS)-E(VS))/max(E(TS),E(VS)) { 0.000000 }
        LipComplexity { 0.000000 }
        OptComplexity { 2.000000 }
        testVal(dead)-testVal(alive) { 0.000000 }
      }
      AnySave {
        file_name { f.GeneticWeightSelect.dat }
      }
      AnyLoad {
        file_name { f.GeneticWeightSelect.dat }
      }
      Eta { 0.050000 }
      DerivEps { 0.000000 }
      BatchSize { 5 }
      #minEpochsForFitnessTest { 2 }
      #maxEpochsForFitnessTest { 3 }
      SelectWeights { T }
      SelectNodes { T }
      maxGrowthOfValError { 0.005000 }
    }
  }
CCMenu {
  Clusters {
    mlp.buyer {
      ActFunction {
      sel id
        plogistic {
          parameter { 0.500000 }
        }
        ptanh {
          parameter { 0.500000 }
        }
        pid {
          parameter { 0.500000 }
        }
      }
      InputModification {
      sel None
        AdaptiveUniformNoise {
          NoiseEta { 1.000000 }
          DampingFactor { 1.000000 }
```

```
      }
      AdaptiveGaussNoise {
        NoiseEta { 1.000000 }
        DampingFactor { 1.000000 }
      }
      FixedUniformNoise {
        SetNoiseLevel {
          NewNoiseLevel { 0.000000 }
        }
      }
      FixedGaussNoise {
        SetNoiseLevel {
          NewNoiseLevel { 0.000000 }
        }
      }
    }
    SaveNoiseLevel {
      Filename { noise_level.dat }
    }
    LoadNoiseLevel {
      Filename { noise_level.dat }
    }
    SaveManipulatorData {
      Filename { inputManip.dat }
    }
    LoadManipulatorData {
      Filename { inputManip.dat }
    }
  }
  mlp.input {
    ActFunction {
     sel id
      plogistic {
        parameter { 0.500000 }
      }
      ptanh {
        parameter { 0.500000 }
      }
      pid {
        parameter { 0.500000 }
      }
    }
    InputModification {
     sel None
      AdaptiveUniformNoise {
        NoiseEta { 1.000000 }
        DampingFactor { 1.000000 }
      }
      AdaptiveGaussNoise {
        NoiseEta { 1.000000 }
        DampingFactor { 1.000000 }
      }
      FixedUniformNoise {
        SetNoiseLevel {
          NewNoiseLevel { 0.000000 }
        }
      }
      FixedGaussNoise {
```

```
              SetNoiseLevel {
                NewNoiseLevel { 0.000000 }
              }
            }
          }
          SaveNoiseLevel {
           Filename { noise_level.dat }
          }
          LoadNoiseLevel {
           Filename { noise_level.dat }
          }
          SaveManipulatorData {
           Filename { inputManip.dat }
          }
          LoadManipulatorData {
           Filename { inputManip.dat }
          }
          Norm { NoNorm }
        }
        mlp.nonbuyer {
         ActFunction {
          sel id
           plogistic {
             parameter { 0.500000 }
           }
           ptanh {
             parameter { 0.500000 }
           }
           pid {
             parameter { 0.500000 }
           }
         }
         InputModification {
          sel None
           AdaptiveUniformNoise {
             NoiseEta { 1.000000 }
             DampingFactor { 1.000000 }
           }
           AdaptiveGaussNoise {
             NoiseEta { 1.000000 }
             DampingFactor { 1.000000 }
           }
           FixedUniformNoise {
             SetNoiseLevel {
               NewNoiseLevel { 0.000000 }
             }
           }
           FixedGaussNoise {
             SetNoiseLevel {
               NewNoiseLevel { 0.000000 }
             }
           }
         }
         SaveNoiseLevel {
           Filename { noise_level.dat }
         }
         LoadNoiseLevel {
           Filename { noise_level.dat }
```

```
      }
      SaveManipulatorData {
        Filename { inputManip.dat }
      }
      LoadManipulatorData {
        Filename { inputManip.dat }
      }
    }
    mlp.compressBuyer {
     ActFunction {
      sel tanh
       plogistic {
         parameter { 0.500000 }
       }
       ptanh {
         parameter { 0.500000 }
       }
       pid {
         parameter { 0.500000 }
       }
     }
     Norm { NoNorm }
    }
    mlp.compressNonbuyer {
     ActFunction {
      sel tanh
       plogistic {
         parameter { 0.500000 }
       }
       ptanh {
         parameter { 0.500000 }
       }
       pid {
         parameter { 0.500000 }
       }
     }
     Norm { NoNorm }
    }
    mlp.autoBuyer {
     ActFunction {
      sel square
      plogistic {
         parameter { 0.500000 }
       }
       ptanh {
         parameter { 0.500000 }
       }
       pid {
         parameter { 0.500000 }
       }
     }
     Norm { NoNorm }
    }
    mlp.autoNonbuyer {
     ActFunction {
      sel square
       plogistic {
         parameter { 0.500000 }
```

```
      }
      ptanh {
        parameter { 0.500000 }
      }
      pid {
        parameter { 0.500000 }
      }
    }
    Norm { NoNorm }
  }
  mlp.sumBuyer {
    ActFunction {
     sel id
      plogistic {
        parameter { 0.500000 }
      }
      ptanh {
        parameter { 0.500000 }
      }
      pid {
        parameter { 0.500000 }
      }
    }
  }
  mlp.sumNonbuyer {
    ActFunction {
     sel id
      plogistic {
        parameter { 0.500000 }
      }
      ptanh {
        parameter { 0.500000 }
      }
      pid {
        parameter { 0.500000 }
      }
    }
  }
  mlp.outputBuyer {
    ActFunction {
     sel id
      plogistic {
        parameter { 0.500000 }
      }
      ptanh {
        parameter { 0.500000 }
      }
      pid {
        parameter { 0.500000 }
      }
    }
    ErrorFunc {
     sel |x|
     |x| {
        parameter { 0.050000 }
      }
     LnCosh {
        parameter { 1.000000 }
```

```
      }
     }
     ToleranceFlag { F }
     Tolerance { 0.000000 }
     Weighting { 1.000000 }
    }
    mlp.classifier {
     ActFunction {
      sel exp
       plogistic {
         parameter { 0.500000 }
       }
       ptanh {
         parameter { 0.500000 }
       }
       pid {
         parameter { 0.500000 }
       }
     }
     ErrorFunc {
      sel Entropy
      |x| {
         parameter { 0.050000 }
       }
       LnCosh {
         parameter { 1.000000 }
       }
     }
     Norm { l1Norm }
     ToleranceFlag { F }
     Tolerance { 0.000000 0.000000 }
     Weighting { 1.000000 1.000000 }
    }
    mlp.outputNonbuyer {
     ActFunction {
      sel id
       plogistic {
        parameter { 0.500000 }
       }
       ptanh {
        parameter { 0.500000 }
       }
       pid {
        parameter { 0.500000 }
       }
     }
     ErrorFunc {
      sel |x|
      |x| {
        parameter { 0.050000 }
       }
       LnCosh {
        parameter { 1.000000 }
       }
     }
     ToleranceFlag { F }
     Tolerance { 0.000000 }
     Weighting { 1.000000 }
```

```
      }
    }
    Connectors {
      mlp.input->compressBuyer {
        WeightWatcher {
          Active { F }
          MaxWeight { 1.000000 }
          MinWeight { 0.000000 }
        }
        LoadWeightsLocal {
          Filename { std }
        }
        SaveWeightsLocal {
          Filename { std }
        }
        Alive { T }
        WtFreeze { F }
        AllowPruning { F }
        Penalty { NoPenalty }
        EtaModifier { 1.000000 }
      }
      mlp.bias->compressBuyer {
        WeightWatcher {
          Active { F }
          MaxWeight { 1.000000 }
          MinWeight { 0.000000 }
        }
        LoadWeightsLocal {
          Filename { std }
        }
        SaveWeightsLocal {
          Filename { std }
        }
        Alive { T }
        WtFreeze { F }
        AllowPruning { F }
        Penalty { NoPenalty }
        EtaModifier { 1.000000 }
      }
      mlp.input->compressNonbuyer {
        WeightWatcher {
          Active { F }
          MaxWeight { 1.000000 }
          MinWeight { 0.000000 }
        }
        LoadWeightsLocal {
          Filename { std }
        }
        SaveWeightsLocal {
          Filename { std }
        }
        Alive { T }
        WtFreeze { F }
        AllowPruning { F }
        Penalty { NoPenalty }
        EtaModifier { 1.000000 }
      }
      mlp.bias->compressNonbuyer {
```

```
WeightWatcher {
  Active { F }
  MaxWeight { 1.000000 }
  MinWeight { 0.000000 }
}
LoadWeightsLocal {
  Filename { std }
}
SaveWeightsLocal {
  Filename { std }
}
Alive { T }
WtFreeze { F }
AllowPruning { F }
Penalty { NoPenalty }
EtaModifier { 1.000000 }
}
mlp.compressBuyer->autoBuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.input->autoBuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { T }
  AllowPruning { F }
  Penalty { NoPenalty }
  EtaModifier { 1.000000 }
}
mlp.bias->autoBuyer {
  WeightWatcher {
    Active { F }
    MaxWeight { 1.000000 }
    MinWeight { 0.000000 }
```

```
      }
   LoadWeightsLocal {
     Filename { std }
   }
   SaveWeightsLocal {
     Filename { std }
   }
   Alive { T }
   WtFreeze { F }
   AllowPruning { F }
   Penalty { NoPenalty }
   EtaModifier { 1.000000 }
}
mlp.compressNonbuyer->autoNonbuyer {
   WeightWatcher {
     Active { F }
     MaxWeight { 1.000000 }
     MinWeight { 0.000000 }
   }
   LoadWeightsLocal {
     Filename { std }
   }
   SaveWeightsLocal {
     Filename { std }
   }
   Alive { T }
   WtFreeze { F }
   AllowPruning { F }
   Penalty { NoPenalty }
   EtaModifier { 1.000000 }
}
mlp.input->autoNonbuyer {
   WeightWatcher {
     Active { F }
     MaxWeight { 1.000000 }
     MinWeight { 0.000000 }
   }
   LoadWeightsLocal {
     Filename { std }
   }
   SaveWeightsLocal {
     Filename { std }
   }
   Alive { T }
   WtFreeze { T }
   AllowPruning { F }
   Penalty { NoPenalty }
   EtaModifier { 1.000000 }
}
mlp.bias->autoNonbuyer {
   WeightWatcher {
     Active { F }
     MaxWeight { 1.000000 }
     MinWeight { 0.000000 }
   }
   LoadWeightsLocal {
     Filename { std }
   }
}
```

```
SaveWeightsLocal {
  Filename { std }
}
Alive { T }
WtFreeze { F }
AllowPruning { F }
Penalty { NoPenalty }
EtaModifier { 1.000000 }
}
mlp.autoBuyer->sumBuyer {
  WeightWatcher {
    Active { T }
    MaxWeight { 0.040000 }
    MinWeight { 0.040000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.autoNonbuyer->sumNonbuyer {
  WeightWatcher {
    Active { T }
    MaxWeight { 0.040000 }
    MinWeight { 0.040000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.sumBuyer->outputBuyer {
  Alive { T }
}
mlp.buyer->outputBuyer {
  Alive { T }
}
mlp.autoBuyer->classifier {
  WeightWatcher {
    Active { T }
    MaxWeight { -0.001000 }
    MinWeight { -3.000000 }
  }
  LoadWeightsLocal {
```

```
        Filename { std }
      }
      SaveWeightsLocal {
        Filename { std }
      }
      Alive { F }
      WtFreeze { F }
      AllowPruning { F }
      Penalty { NoPenalty }
      EtaModifier { 1.000000 }
    }
    mlp.autoNonbuyer->classifier {
      WeightWatcher {
        Active { T }
        MaxWeight { -0.001000 }
        MinWeight { -3.000000 }
      }
      LoadWeightsLocal {
        Filename { std }
      }
      SaveWeightsLocal {
        Filename { std }
      }
      Alive { F }
      WtFreeze { F }
      AllowPruning { F }
      Penalty { NoPenalty }
      EtaModifier { 1.000000 }
    }
    mlp.bias->classifier {
      WeightWatcher {
        Active { F }
        MaxWeight { 1.000000 }
        MinWeight { 0.000000 }
      }
      LoadWeightsLocal {
        Filename { std }
      }
      SaveWeightsLocal {
        Filename { std }
      }
      Alive { F }
      WtFreeze { F }
      AllowPruning { F }
      Penalty { NoPenalty }
      EtaModifier { 1.000000 }
    }
    mlp.sumNonbuyer->outputNonbuyer {
      Alive { T }
    }
    mlp.nonbuyer->outputNonbuyer {
      Alive { T }
    }
  }
  AnySave {
    file_name { f.CCMenu.dat }
  }
  AnyLoad {
```

```
    file_name { f.CCMenu.dat }
   }
 }
 TestRun {
   Filename { Test }
   Part.Transformed { F }
 }
 Online {
   Filename { Online.dat }
 }
}
```

**Phase 2:**

```
BpNet {
 Globals {
  WtPenalty {
   sel NoPenalty
    Weigend {
      Lambda { 0.000000 }
      AutoAdapt { T }
      w0 { 1.000000 }
      DeltaLambda { 0.000001 }
      ReducFac { 0.900000 }
      Gamma { 0.900000 }
      DesiredError { 0.000000 }
    }
    WtDecay {
      Lambda { 0.001000 }
      AutoAdapt { F }
      AdaptTime { 10 }
      EpsObj { 0.001000 }
      ObjSet { Training }
      EpsilonFac { 1.000000 }
    }
    ExtWtDecay {
      Lambda { 0.001000 }
      AutoAdapt { F }
      AdaptTime { 10 }
      EpsObj { 0.001000 }
      ObjSet { Training }
      EpsilonFac { 1.000000 }
    }
    Finnoff {
      AutoAdapt { T }
      Lambda { 0.000000 }
      DeltaLambda { 0.000001 }
      ReducFac { 0.900000 }
      Gamma { 0.900000 }
      DesiredError { 0.000000 }
    }
  }
  ErrorFunc {
   sel none
   |x| {
      parameter { 0.050000 }
   }
   LnCosh {
```

```
        parameter { 1.000000 }
      }
    }
    AnySave {
      file_name { f.Globals.dat }
    }
    AnyLoad {
      file_name { f.Globals.dat }
    }
    ASCII { F }
  }
  LearnCtrl {
   sel Stochastic
    Stochastic {
      PatternSelection {
       sel Permute
        SubSample {
          Percent { 0.500000 }
        }
        ExpRandom {
          Lambda { 2.000000 }
        }
      }
      WtPruneCtrl {
        PruneSchedule {
         sel FixSchedule
          FixSchedule {
            Limit_0 { 10 }
            Limit_1 { 10 }
            Limit_2 { 10 }
            Limit_3 { 10 }
            RepeatLast { T }
          }
          DynSchedule {
            MaxLength { 4 }
            MinimumRuns { 0 }
            Training { F }
            Validation { T }
            Generalization { F }
          }
          DivSchedule {
            Divergence { 0.100000 }
            MinEpochs { 5 }
          }
        }
        PruneAlg {
         sel FixPrune
          FixPrune {
            Perc_0 { 0.100000 }
            Perc_1 { 0.100000 }
            Perc_2 { 0.100000 }
            Perc_3 { 0.100000 }
          }
          EpsiPrune {
            DeltaEps { 0.050000 }
            StartEps { 0.050000 }
            MaxEps { 1.000000 }
            ReuseEps { F }
```

```
      }
    }
    Tracer {
      Active { F }
      Set { Validation }
      File { trace }
    }
    Active { F }
    Randomize { 0.000000 }
    PruningSet { Training }
    Method { S-Pruning }
  }
  StopControl {
    EpochLimit {
      Active { F }
      MaxEpoch { 60 }
    }
    MovingExpAverage {
      Active { F }
      MaxLength { 4 }
      Training { F }
      Validation { T }
      Generalization { F }
      Decay { 0.900000 }
    }
    CheckObjectiveFct {
      Active { F }
      MaxLength { 4 }
      Training { F }
      Validation { T }
      Generalization { F }
    }
    CheckDelta {
      Active { F }
      Divergence { 0.100000 }
    }
  }
  EtaCtrl {
    Mode {
     sel EtaSchedule
      EtaSchedule {
        SwitchTime { 10 }
        ReductFactor { 0.950000 }
      }
      FuzzCtrl {
        MaxDeltaObj { 0.300000 }
        MaxDelta2Obj { 0.300000 }
        MaxEtaChange { 0.020000 }
        MinEta { 0.001000 }
        MaxEta { 0.100000 }
        Smoother { 1.000000 }
      }
    }
    Active { F }
  }
  LearnAlgo {
   sel OnlineBackProp
    VarioEta {
```

```
      MinCalls { 200 }
    }
    MomentumBackProp {
     Alpha { 0.050000 }
    }
    Quickprop {
     Decay { 0.050000 }
     Mu { 2.000000 }
    }
   }
   AnySave {
    file_name { f.Stochastic.dat }
   }
   AnyLoad {
    file_name { f.Stochastic.dat }
   }
   BatchSize { 1 }
   Eta { 0.000100 }
   DerivEps { 0.000000 }
  }
 TrueBatch {
  PatternSelection {
   sel Sequential
    SubSample {
     Percent { 0.500000 }
    }
    ExpRandom {
     Lambda { 2.000000 }
    }
  }
  WtPruneCtrl {
   Tracer {
     Active { F }
     Set { Validation }
     File { trace }
   }
   Active { F }
   Randomize { 0.000000 }
   PruningSet { Training }
   Method { S-Pruning }
  }
  EtaCtrl {
   Active { F }
  }
  LearnAlgo {
   sel VarioEta
    VarioEta {
     MinCalls { 200 }
    }
    MomentumBackProp {
     Alpha { 0.050000 }
    }
    Quickprop {
     Decay { 0.050000 }
     Mu { 2.000000 }
    }
  }
  AnySave {
```

```
      file_name { f.TrueBatch.dat }
    }
    AnyLoad {
      file_name { f.TrueBatch.dat }
    }
    Eta { 0.050000 }
    DerivEps { 0.000000 }
  }
  LineSearch {
    PatternSelection {
    sel Sequential
      SubSample {
        Percent { 0.500000 }
      }
      ExpRandom {
        Lambda { 2.000000 }
      }
    }
    WtPruneCtrl {
      Tracer {
        Active { F }
        Set { Validation }
        File { trace }
      }
      Active { F }
      Randomize { 0.000000 }
      PruningSet { Training }
      Method { S-Pruning }
    }
    LearnAlgo {
    sel ConjGradient
      VarioEta {
        MinCalls { 200 }
      }
      MomentumBackProp {
        Alpha { 0.050000 }
      }
      Quickprop {
        Decay { 0.050000 }
        Mu { 2.000000 }
      }
      Low-Memory-BFGS {
        Limit { 10 }
      }
    }
    AnySave {
      file_name { f.LineSearch.dat }
    }
    AnyLoad {
      file_name { f.LineSearch.dat }
    }
    EtaNull { 1.000000 }
    MaxSteps { 10 }
    LS_Precision { 0.500000 }
    TrustRegion { T }
    DerivEps { 0.000000 }
    BatchSize { 2147483647 }
  }
```

```
GeneticWeightSelect {
 PatternSelection {
  sel Sequential
   SubSample {
     Percent { 0.500000 }
   }
   ExpRandom {
     Lambda { 2.000000 }
   }
 }
 LearnAlgo {
  sel VarioEta
   VarioEta {
     MinCalls { 200 }
   }
   MomentumBackProp {
     Alpha { 0.050000 }
   }
 }
 ObjFctTracer {
  Active { F }
  File { objFunc }
 }
 SearchControl {
  SearchStrategy {
   sel HillClimberControl
    HillClimberControl {
      %InitialAlive { 0.950000 }
      InheritWeights { T }
      Beta { 0.100000 }
      MutationType { MacroMutation }
      MaxTrials { 50 }
    }
    PBILControl {
      %InitialAlive { 0.950000 }
      InheritWeights { T }
      Beta { 0.100000 }
      Alpha { 0.100000 }
      PopulationSize { 40 }
    }
    PopulationControl {
      pCrossover { 1.000000 }
      CrossoverType { SimpleCrossover }
      Scaling { T }
      ScalingFactor { 2.000000 }
      Sharing { T }
      SharingFactor { 0.050000 }
      PopulationSize { 50 }
      min.%InitialAlive { 0.010000 }
      max.%InitialAlive { 0.100000 }
    }
  }
  pMutation { 0.000000 }
 }
 ObjectiveFunctionWeights {
  %Alive { 0.600000 }
  E(TS) { 0.200000 }
  Improvement(TS) { 0.000000 }
```

```
          E(VS) { 1.000000 }
          Improvement(VS) { 0.000000 }
          (E(TS)-E(VS))/max(E(TS),E(VS)) { 0.000000 }
          LipComplexity { 0.000000 }
          OptComplexity { 2.000000 }
          testVal(dead)-testVal(alive) { 0.000000 }
        }
        AnySave {
          file_name { f.GeneticWeightSelect.dat }
        }
        AnyLoad {
          file_name { f.GeneticWeightSelect.dat }
        }
        Eta { 0.050000 }
        DerivEps { 0.000000 }
        BatchSize { 5 }
        #minEpochsForFitnessTest { 2 }
        #maxEpochsForFitnessTest { 3 }
        SelectWeights { T }
        SelectNodes { T }
        maxGrowthOfValError { 0.005000 }
      }
    }
    CCMenu {
      Clusters {
        mlp.buyer {
          ActFunction {
          sel id
            plogistic {
              parameter { 0.500000 }
            }
            ptanh {
              parameter { 0.500000 }
            }
            pid {
              parameter { 0.500000 }
            }
          }
          InputModification {
          sel None
            AdaptiveUniformNoise {
              NoiseEta { 1.000000 }
              DampingFactor { 1.000000 }
            }
            AdaptiveGaussNoise {
              NoiseEta { 1.000000 }
              DampingFactor { 1.000000 }
            }
            FixedUniformNoise {
              SetNoiseLevel {
                NewNoiseLevel { 0.000000 }
              }
            }
            FixedGaussNoise {
              SetNoiseLevel {
                NewNoiseLevel { 0.000000 }
              }
            }
```

```
                              }
                              SaveNoiseLevel {
                                Filename { noise_level.dat }
                              }
                              LoadNoiseLevel {
                                Filename { noise_level.dat }
                              }
                              SaveManipulatorData {
                                Filename { inputManip.dat }
                              }
                              LoadManipulatorData {
                                Filename { inputManip.dat }
                              }
                            }
                            mlp.input {
                              ActFunction {
                              sel id
                                plogistic {
                                  parameter { 0.500000 }
                                }
                                ptanh {
                                  parameter { 0.500000 }
                                }
                                pid {
                                  parameter { 0.500000 }
                                }
                              }
                              InputModification {
                              sel None
                                AdaptiveUniformNoise {
                                  NoiseEta { 1.000000 }
                                  DampingFactor { 1.000000 }
                                }
                                AdaptiveGaussNoise {
                                  NoiseEta { 1.000000 }
                                  DampingFactor { 1.000000 }
                                }
                                FixedUniformNoise {
                                  SetNoiseLevel {
                                    NewNoiseLevel { 0.000000 }
                                  }
                                }
                                FixedGaussNoise {
                                  SetNoiseLevel {
                                    NewNoiseLevel { 0.000000 }
                                  }
                                }
                              }
                              SaveNoiseLevel {
                                Filename { noise_level.dat }
                              }
                              LoadNoiseLevel {
                                Filename { noise_level.dat }
                              }
                              SaveManipulatorData {
                                Filename { inputManip.dat }
                              }
                              LoadManipulatorData {
```

```
      Filename { inputManip.dat }
      }
      Norm { NoNorm }
      }
      mlp.nonbuyer {
       ActFunction {
        sel id
         plogistic {
          parameter { 0.500000 }
         }
         ptanh {
          parameter { 0.500000 }
         }
         pid {
          parameter { 0.500000 }
         }
        }
        InputModification {
         sel None
          AdaptiveUniformNoise {
           NoiseEta { 1.000000 }
           DampingFactor { 1.000000 }
          }
          AdaptiveGaussNoise {
           NoiseEta { 1.000000 }
           DampingFactor { 1.000000 }
          }
          FixedUniformNoise {
           SetNoiseLevel {
            NewNoiseLevel { 0.000000 }
           }
          }
          FixedGaussNoise {
           SetNoiseLevel {
            NewNoiseLevel { 0.000000 }
           }
          }
        }
        SaveNoiseLevel {
         Filename { noise_level.dat }
        }
        LoadNoiseLevel {
         Filename { noise_level.dat }
        }
        SaveManipulatorData {
         Filename { inputManip.dat }
        }
        LoadManipulatorData {
         Filename { inputManip.dat }
        }
      }
      mlp.compressBuyer {
       ActFunction {
        sel tanh
         plogistic {
          parameter { 0.500000 }
         }
         ptanh {
```

```
              parameter { 0.500000 }
            }
            pid {
              parameter { 0.500000 }
            }
          }
          Norm { NoNorm }
        }
        mlp.compressNonbuyer {
         ActFunction {
          sel tanh
           plogistic {
             parameter { 0.500000 }
           }
           ptanh {
             parameter { 0.500000 }
           }
           pid {
             parameter { 0.500000 }
           }
         }
         Norm { NoNorm }
        }
        mlp.autoBuyer {
         ActFunction {
          sel square
           plogistic {
             parameter { 0.500000 }
           }
           ptanh {
             parameter { 0.500000 }
           }
           pid {
             parameter { 0.500000 }
           }
         }
         Norm { NoNorm }
        }
        mlp.autoNonbuyer {
         ActFunction {
          sel square
           plogistic {
             parameter { 0.500000 }
           }
           ptanh {
             parameter { 0.500000 }
           }
           pid {
             parameter { 0.500000 }
           }
         }
         Norm { NoNorm }
        }
        mlp.sumBuyer {
         ActFunction {
          sel id
           plogistic {
             parameter { 0.500000 }
```

```
      }
      ptanh {
        parameter { 0.500000 }
      }
      pid {
        parameter { 0.500000 }
      }
    }
  }
  mlp.sumNonbuyer {
   ActFunction {
    sel id
     plogistic {
        parameter { 0.500000 }
     }
     ptanh {
        parameter { 0.500000 }
     }
     pid {
        parameter { 0.500000 }
     }
    }
  }
  mlp.outputBuyer {
   ActFunction {
    sel id
     plogistic {
        parameter { 0.500000 }
     }
     ptanh {
        parameter { 0.500000 }
     }
     pid {
        parameter { 0.500000 }
     }
    }
    ErrorFunc {
    sel LnCosh
     |x| {
        parameter { 0.050000 }
     }
     LnCosh {
        parameter { 1.000000 }
     }
    }
    ToleranceFlag { F }
    Tolerance { 0.000000 }
    Weighting { 1.000000 }
  }
  mlp.classifier {
   ActFunction {
    sel exp
     plogistic {
        parameter { 0.500000 }
     }
     ptanh {
        parameter { 0.500000 }
     }
```

```
          pid {
            parameter { 0.500000 }
          }
        }
        ErrorFunc {
         sel Entropy
         |x| {
            parameter { 0.050000 }
         }
         LnCosh {
            parameter { 1.000000 }
         }
        }
        Norm { l1Norm }
        ToleranceFlag { F }
        Tolerance { 0.000000 0.000000 }
        Weighting { 1.000000 1.000000 }
      }
      mlp.outputNonbuyer {
        ActFunction {
         sel id
          plogistic {
            parameter { 0.500000 }
          }
          ptanh {
            parameter { 0.500000 }
          }
          pid {
            parameter { 0.500000 }
          }
        }
        ErrorFunc {
         sel LnCosh
         |x| {
            parameter { 0.050000 }
         }
         LnCosh {
            parameter { 1.000000 }
         }
        }
        ToleranceFlag { F }
        Tolerance { 0.000000 }
        Weighting { 1.000000 }
      }
    }
    Connectors {
     mlp.input->compressBuyer {
       WeightWatcher {
         Active { F }
         MaxWeight { 1.000000 }
         MinWeight { 0.000000 }
       }
       LoadWeightsLocal {
         Filename { std }
       }
       SaveWeightsLocal {
         Filename { std }
       }
```

```
     Alive { T }
     WtFreeze { T }
     AllowPruning { F }
     Penalty { NoPenalty }
     EtaModifier { 1.000000 }
   }
   mlp.bias->compressBuyer {
     WeightWatcher {
       Active { F }
       MaxWeight { 1.000000 }
       MinWeight { 0.000000 }
     }
     LoadWeightsLocal {
       Filename { std }
     }
     SaveWeightsLocal {
       Filename { std }
     }
     Alive { T }
     WtFreeze { T }
     AllowPruning { F }
     Penalty { NoPenalty }
     EtaModifier { 1.000000 }
   }
   mlp.input->compressNonbuyer {
     WeightWatcher {
       Active { F }
       MaxWeight { 1.000000 }
       MinWeight { 0.000000 }
     }
     LoadWeightsLocal {
       Filename { std }
     }
     SaveWeightsLocal {
       Filename { std }
     }
     Alive { T }
     WtFreeze { T }
     AllowPruning { F }
     Penalty { NoPenalty }
     EtaModifier { 1.000000 }
   }
   mlp.bias->compressNonbuyer {
     WeightWatcher {
       Active { F }
       MaxWeight { 1.000000 }
       MinWeight { 0.000000 }
     }
     LoadWeightsLocal {
       Filename { std }
     }
     SaveWeightsLocal {
       Filename { std }
     }
     Alive { T }
     WtFreeze { T }
     AllowPruning { F }
     Penalty { NoPenalty }
```

```
        EtaModifier { 1.000000 }
      }
      mlp.compressBuyer->autoBuyer {
       WeightWatcher {
        Active { F }
        MaxWeight { 1.000000 }
        MinWeight { 0.000000 }
       }
       LoadWeightsLocal {
        Filename { std }
       }
       SaveWeightsLocal {
        Filename { std }
       }
       Alive { T }
       WtFreeze { T }
       AllowPruning { F }
       Penalty { NoPenalty }
       EtaModifier { 1.000000 }
      }
      mlp.input->autoBuyer {
       WeightWatcher {
        Active { F }
        MaxWeight { 1.000000 }
        MinWeight { 0.000000 }
       }
       LoadWeightsLocal {
        Filename { std }
       }
       SaveWeightsLocal {
        Filename { std }
       }
       Alive { T }
       WtFreeze { T }
       AllowPruning { F }
       Penalty { NoPenalty }
       EtaModifier { 1.000000 }
      }
     mlp.bias->autoBuyer {
       WeightWatcher {
        Active { F }
       _MaxWeight { 1.000000 }
        MinWeight { 0.000000 }
       }
       LoadWeightsLocal {
        Filename { std }
       }
       SaveWeightsLocal {
        Filename { std }
       }
       Alive { F }
       WtFreeze { F }
       AllowPruning { F }
       Penalty { NoPenalty }
       EtaModifier { 1.000000 }
      }
     mlp.compressNonbuyer->autoNonbuyer {
       WeightWatcher {
```

```
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { T }
  AllowPruning { F }
  Penalty { NoPenalty }
  EtaModifier { 1.000000 }
}
mlp.input->autoNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { T }
  AllowPruning { F }
  Penalty { NoPenalty }
  EtaModifier { 1.000000 }
}
mlp.bias->autoNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { F }
  WtFreeze { F }
  AllowPruning { F }
  Penalty { NoPenalty }
  EtaModifier { 1.000000 }
}
mlp.autoBuyer->sumBuyer {
  WeightWatcher {
    Active { T }
    MaxWeight { 0.040000 }
    MinWeight { 0.040000 }
  }
```

```
LoadWeightsLocal {
  Filename { std }
}
SaveWeightsLocal {
  Filename { std }
}
Alive { F }
WtFreeze { T }
AllowPruning { F }
Penalty { NoPenalty }
EtaModifier { 1.000000 }
}
mlp.autoNonbuyer->sumNonbuyer {
  WeightWatcher {
    Active { T }
    MaxWeight { 0.040000 }
    MinWeight { 0.040000 }
  }
  LoadWeightsLocal {
    Filename { std }
  }
  SaveWeightsLocal {
    Filename { std }
  }
  Alive { F }
  WtFreeze { T }
  AllowPruning { F }
  Penalty { NoPenalty }
  EtaModifier { 1.000000 }
}
mlp.sumBuyer->outputBuyer {
  Alive { F }
}
mlp.buyer->outputBuyer {
  Alive { F }
}
mlp.autoBuyer->classifier {
  WeightWatcher {
    Active { T }
    MaxWeight { -0.001000 }
    MinWeight { -3.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.autoNonbuyer->classifier {
  WeightWatcher {
    Active { T }
    MaxWeight { -0.001000 }
```

```
          MinWeight { -3.000000 }
        }
        LoadWeightsLocal {
          Filename { std }
        }
        SaveWeightsLocal {
          Filename { std }
        }
        Alive { T }
        WtFreeze { F }
        AllowPruning { F }
        Penalty { NoPenalty }
        EtaModifier { 1.000000 }
      }
      mlp.bias->classifier {
        WeightWatcher {
          Active { F }
          MaxWeight { 1.000000 }
          MinWeight { 0.000000 }
        }
        LoadWeightsLocal {
          Filename { std }
        }
        SaveWeightsLocal {
          Filename { std }
        }
        Alive { T }
        WtFreeze { F }
        AllowPruning { F }
        Penalty { NoPenalty }
        EtaModifier { 1.000000 }
      }
      mlp.sumNonbuyer->outputNonbuyer {
        Alive { F }
      }
      mlp.nonbuyer->outputNonbuyer {
        Alive { F }
      }
    }
    AnySave {
      file_name { f.CCMenu.dat }
    }
    AnyLoad {
      file_name { f.CCMenu.dat }
    }
  }
  TestRun {
    Filename { Test }
    Part.Transformed { F }
  }
  Online {
    Filename { Online.dat }
  }

)
```

**Phase 3:**

BpNet {

**Phase 3:**

BpNet {

```
Globals {
  WtPenalty {
   sel NoPenalty
    Weigend {
      Lambda { 0.000000 }
      AutoAdapt { T }
      w0 { 1.000000 }
      DeltaLambda { 0.000001 }
      ReducFac { 0.900000 }
      Gamma { 0.900000 }
      DesiredError { 0.000000 }
    }
    WtDecay {
      Lambda { 0.001000 }
      AutoAdapt { F }
      AdaptTime { 10 }
      EpsObj { 0.001000 }
      ObjSet { Training }
      EpsilonFac { 1.000000 }
    }
    ExtWtDecay {
      Lambda { 0.001000 }
      AutoAdapt { F }
      AdaptTime { 10 }
      EpsObj { 0.001000 }
      ObjSet { Training }
      EpsilonFac { 1.000000 }
    }
    Finnoff {
      AutoAdapt { T }
      Lambda { 0.000000 }
      DeltaLambda { 0.000001 }
      ReducFac { 0.900000 }
      Gamma { 0.900000 }
      DesiredError { 0.000000 }
    }
  }
  ErrorFunc {
   sel none
    |x| {
      parameter { 0.050000 }
    }
    LnCosh {
      parameter { 1.000000 }
    }
  }
  AnySave {
   file_name { f.Globals.dat }
  }
  AnyLoad {
   file_name { f.Globals.dat }
  }
  ASCII { F }
}
LearnCtrl {
 sel Stochastic
   Stochastic {
     PatternSelection {
```

```
  sel Permute
  SubSample {
    Percent { 0.500000 }
  }
  ExpRandom {
    Lambda { 2.000000 }
  }
}
WtPruneCtrl {
  PruneSchedule {
  sel FixSchedule
   FixSchedule {
     Limit_0 { 10 }
     Limit_1 { 10 }
     Limit_2 { 10 }
     Limit_3 { 10 }
     RepeatLast { T }
   }
   DynSchedule {
     MaxLength { 4 }
     MinimumRuns { 0 }
     Training { F }
     Validation { T }
     Generalization { F }
   }
   DivSchedule {
     Divergence { 0.100000 }
     MinEpochs { 5 }
   }
  }
  PruneAlg {
  sel FixPrune
   FixPrune {          ..
     Perc_0 { 0.100000 }
     Perc_1 { 0.100000 }
     Perc_2 { 0.100000 }
     Perc_3 { 0.100000 }
   }
   EpsiPrune {
     DeltaEps { 0.050000 }
     StartEps { 0.050000 }
     MaxEps { 1.000000 }
     ReuseEps { F }
   }
  }
  Tracer {
    Active { F }
    Set { Validation }
    File { trace }
  }
  Active { F }
  Randomize { 0.000000 }
  PruningSet { Training }
  Method { S-Pruning }
}
StopControl {
  EpochLimit {
   Active { F }
```

```
        MaxEpoch { 60 }
      }
      MovingExpAverage {
       Active { F }
       MaxLength { 4 }
       Training { F }
       Validation { T }
       Generalization { F }
       Decay { 0.900000 }
      }
      CheckObjectiveFct {
       Active { F }
       MaxLength { 4 }
       Training { F }
       Validation { T }
       Generalization { F }
      }
      CheckDelta {
       Active { F }
       Divergence { 0.100000 }
      }
     }
     EtaCtrl {
      Mode {
       sel EtaSchedule
        EtaSchedule {
         SwitchTime { 10 }
         ReductFactor { 0.950000 }
        }
        FuzzCtrl {
         MaxDeltaObj { 0.300000 }
         MaxDelta2Obj { 0.300000 }
         MaxEtaChange { 0.020000 }
         MinEta { 0.001000 }
         MaxEta { 0.100000 }
         Smoother { 1.000000 }
        }
       }
      Active { F }
     }
     LearnAlgo {
      sel OnlineBackProp
      VarioEta {
       MinCalls { 200 }
      }
      MomentumBackProp {
       Alpha { 0.050000 }
      }
      Quickprop {
       Decay { 0.050000 }
       Mu { 2.000000 }
      }
     }
     AnySave {
      file_name { f.Stochastic.dat }
     }
     AnyLoad {
      file_name { f.Stochastic.dat }
```

```
        }
        BatchSize { 1 }
        Eta { 0.000100 }
        DerivEps { 0.000000 }
      }
      TrueBatch {
        PatternSelection {
         sel Sequential
          SubSample {
            Percent { 0.500000 }
          }
          ExpRandom {
            Lambda { 2.000000 }
          }
        }
        WtPruneCtrl {
          Tracer {
            Active { F }
            Set { Validation }
            File { trace }
          }
          Active { F }
          Randomize { 0.000000 }
          PruningSet { Training }
          Method { S-Pruning }
        }
        EtaCtrl {
          Active { F }
        }
        LearnAlgo {
         sel VarioEta
          VarioEta {
            MinCalls { 200 }
          }
          MomentumBackProp {
            Alpha { 0.050000 }
          }
          Quickprop {
            Decay { 0.050000 }
            Mu { 2.000000 }
          }
        }
        AnySave {
          file_name { f.TrueBatch.dat }
        }
        AnyLoad {
          file_name { f.TrueBatch.dat }
        }
        Eta { 0.050000 }
        DerivEps { 0.000000 }
      }
      LineSearch {
        PatternSelection {
         sel Sequential
          SubSample {
            Percent { 0.500000 }
          }
          ExpRandom {
```

```
        Lambda { 2.000000 }
      }
    }
    WtPruneCtrl {
      Tracer {
        Active { F }
        Set { Validation }
        File { trace }
      }
      Active { F }
      Randomize { 0.000000 }
      PruningSet { Training }
      Method { S-Pruning }
    }
    LearnAlgo {
     sel ConjGradient
      VarioEta {
        MinCalls { 200 }
      }
      MomentumBackProp {
        Alpha { 0.050000 }
      }
      Quickprop {
        Decay { 0.050000 }
        Mu { 2.000000 }
      }
      Low-Memory-BFGS {
        Limit { 10 }
      }
    }
    AnySave {
      file_name { f.LineSearch.dat }
    }
    AnyLoad {
      file_name { f.LineSearch.dat }
    }
    EtaNull { 1.000000 }
    MaxSteps { 10 }
    LS_Precision { 0.500000 }
    TrustRegion { T }
    DerivEps { 0.000000 }
    BatchSize { 2147483647 }
  }
  GeneticWeightSelect {
    PatternSelection {
     sel Sequential
      SubSample {
        Percent { 0.500000 }
      }
      ExpRandom {
        Lambda { 2.000000 }
      }
    }
    LearnAlgo {
     sel VarioEta
      VarioEta {
        MinCalls { 200 }
      }
```

```
MomentumBackProp {
  Alpha { 0.050000 }
 }
}
ObjFctTracer {
 Active { F }
 File { objFunc }
}
SearchControl {
 SearchStrategy {
  sel HillClimberControl
  HillClimberControl {
    %InitialAlive { 0.950000 }
    InheritWeights { T }
    Beta { 0.100000 }
    MutationType { MacroMutation }
    MaxTrials { 50 }
  }
  PBILControl {
    %InitialAlive { 0.950000 }
    InheritWeights { T }
    Beta { 0.100000 }
    Alpha { 0.100000 }
    PopulationSize { 40 }
  }
  PopulationControl {
   pCrossover { 1.000000 }
   CrossoverType { SimpleCrossover }
   Scaling { T }
   ScalingFactor { 2.000000 }
   Sharing { T }
   SharingFactor { 0.050000 }
   PopulationSize { 50 }
   min.%InitialAlive { 0.010000 }
   max.%InitialAlive { 0.100000 }
  }
 }
 pMutation { 0.000000 }
}
ObjectiveFunctionWeights {
 %Alive { 0.600000 }
 E(TS) { 0.200000 }
 Improvement(TS) { 0.000000 }
 E(VS) { 1.000000 }
 Improvement(VS) { 0.000000 }
 (E(TS)-E(VS))/max(E(TS),E(VS)) { 0.000000 }
 LipComplexity { 0.000000 }
 OptComplexity { 2.000000 }
 testVal(dead)-testVal(alive) { 0.000000 }
}
AnySave {
 file_name { f.GeneticWeightSelect.dat }
}
AnyLoad {
 file_name { f.GeneticWeightSelect.dat }
}
Eta { 0.050000 }
DerivEps { 0.000000 }
```

```
       BatchSize { 5 }
       #minEpochsForFitnessTest { 2 }
       #maxEpochsForFitnessTest { 3 }
       SelectWeights { T }
       SelectNodes { T }
       maxGrowthOfValError { 0.005000 }
      }
     }
    CCMenu {
      Clusters {
       mlp.buyer {
        ActFunction {
         sel id
          plogistic {
            parameter { 0.500000 }
          }
          ptanh {
            parameter { 0.500000 }
          }
          pid {
            parameter { 0.500000 }
          }
        }
        InputModification {
         sel None
          AdaptiveUniformNoise {
            NoiseEta { 1.000000 }
            DampingFactor { 1.000000 }
          }
          AdaptiveGaussNoise {
            NoiseEta { 1.000000 }
            DampingFactor { 1.000000 }
          }
          FixedUniformNoise {
            SetNoiseLevel {
             NewNoiseLevel { 0.000000 }
            }
          }
          FixedGaussNoise {
            SetNoiseLevel {
             NewNoiseLevel { 0.000000 }
            }
          }
        }
        SaveNoiseLevel {
         Filename { noise_level.dat }
        }
        LoadNoiseLevel {
         Filename { noise_level.dat }
        }
        SaveManipulatorData {
         Filename { inputManip.dat }
        }
        LoadManipulatorData {
         Filename { inputManip.dat }
        }
       }
      mlp.input {
```

```
ActFunction {
 sel id
  plogistic {
   parameter { 0.500000 }
  }
  ptanh {
   parameter { 0.500000 }
  }
  pid {
   parameter { 0.500000 }
  }
 }
 InputModification {
 sel None
  AdaptiveUniformNoise {
   NoiseEta { 1.000000 }
   DampingFactor { 1.000000 }
  }
  AdaptiveGaussNoise {
   NoiseEta { 1.000000 }
   DampingFactor { 1.000000 }
  }
  FixedUniformNoise {
   SetNoiseLevel {
    NewNoiseLevel { 0.000000 }
   }
  }
  FixedGaussNoise {
   SetNoiseLevel {
    NewNoiseLevel { 0.000000 }
   }
  }
 }
 SaveNoiseLevel {
  Filename { noise_level.dat }
 }
 LoadNoiseLevel {
  Filename { noise_level.dat }
 }
 SaveManipulatorData {
  Filename { inputManip.dat }
 }
 LoadManipulatorData {
  Filename { inputManip.dat }
 }
 Norm { NoNorm }
}
mlp.nonbuyer {
 ActFunction {
 sel id
  plogistic {
   parameter { 0.500000 }
  }
  ptanh {
   parameter { 0.500000 }
  }
  pid {
   parameter { 0.500000 }
```

```
                }
              }
            InputModification {
             sel None
              AdaptiveUniformNoise {
               NoiseEta { 1.000000 }
               DampingFactor { 1.000000 }
              }
              AdaptiveGaussNoise {
               NoiseEta { 1.000000 }
               DampingFactor { 1.000000 }
              }
              FixedUniformNoise {
               SetNoiseLevel {
                NewNoiseLevel { 0.000000 }
               }
              }
              FixedGaussNoise {
               SetNoiseLevel {
                NewNoiseLevel { 0.000000 }
               }
              }
            }
            SaveNoiseLevel {
             Filename { noise_level.dat }
            }
            LoadNoiseLevel {
             Filename { noise_level.dat }
            }
            SaveManipulatorData {
             Filename { inputManip.dat }
            }
            LoadManipulatorData {
             Filename { inputManip.dat }
            }
          }
          mlp.compressBuyer {
           ActFunction {
            sel tanh
             plogistic {
              parameter { 0.500000 }
             }
             ptanh {
              parameter { 0.500000 }
             }
             pid {
              parameter { 0.500000 }
             }
           }
           Norm { NoNorm }
          }
          mlp.compressNonbuyer {
           ActFunction {
            sel tanh
             plogistic {
              parameter { 0.500000 }
             }
             ptanh {
```

```
             parameter { 0.500000 }
           }
           pid {
             parameter { 0.500000 }
           }
         }
         Norm { NoNorm }
       }
       mlp.autoBuyer {
        ActFunction {
         sel square
          plogistic {
            parameter { 0.500000 }
          }
          ptanh {
            parameter { 0.500000 }
          }
          pid {
            parameter { 0.500000 }
          }
        }
        Norm { NoNorm }
       }
       mlp.autoNonbuyer {
        ActFunction {
         sel square
          plogistic {
            parameter { 0.500000 }
          }
          ptanh {
            parameter { 0.500000 }
          }
          pid {
            parameter { 0.500000 }
          }
        }
        Norm { NoNorm }
       }
       mlp.sumBuyer {
        ActFunction {
         sel id
          plogistic {
            parameter { 0.500000 }
          }
          ptanh {
            parameter { 0.500000 }
          }
          pid {
            parameter { 0.500000 }
          }
        }
       }
       mlp.sumNonbuyer {
        ActFunction {
         sel id
          plogistic {
            parameter { 0.500000 }
          }
```

```
ptanh {
  parameter { 0.500000 }
}
pid {
  parameter { 0.500000 }
}
}
}
mlp.outputBuyer {
 ActFunction {
 sel id
  plogistic {
   parameter { 0.500000 }
  }
  ptanh {
   parameter { 0.500000 }
  }
  pid {
   parameter { 0.500000 }
  }
 }
 ErrorFunc {
 sel |x|
  |x| {
   parameter { 0.050000 }
  }
  LnCosh {
   parameter { 1.000000 }
  }
 }
 ToleranceFlag { F }
 Tolerance { 0.000000 }
 Weighting { 1.000000 }
}
mlp.classifier {
 ActFunction {
 sel exp
  plogistic {
   parameter { 0.500000 }
  }
  ptanh {
   parameter { 0.500000 }
  }
  pid {
   parameter { 0.500000 }
  }
 }
 ErrorFunc {
 sel Entropy
  |x| {
   parameter { 0.050000 }
  }
  LnCosh {
   parameter { 1.000000 }
  }
 }
 Norm { l1Norm }
 ToleranceFlag { F }
```

```
      Tolerance { 0.000000 0.000000 }
      Weighting { 1.000000 1.000000 }
    }
    mlp.outputNonbuyer {
     ActFunction {
      sel id
       plogistic {
         parameter { 0.500000 }
       }
       ptanh {
         parameter { 0.500000 }
       }
       pid {
         parameter { 0.500000 }
       }
      }
      ErrorFunc {
      sel |x|
      |x| {
         parameter { 0.050000 }
       }
       LnCosh {
         parameter { 1.000000 }
       }
      }
      ToleranceFlag { F }
      Tolerance { 0.000000 }
      Weighting { 1.000000 }
    }
  }
  Connectors {
   mlp.input->compressBuyer {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F }
    AllowPruning { F }
    Penalty { NoPenalty }
    EtaModifier { 1.000000 }
   }
   mlp.bias->compressBuyer {
    WeightWatcher {
      Active { F }
      MaxWeight { 1.000000 }
      MinWeight { 0.000000 }
    }
    LoadWeightsLocal {
      Filename { std }
    }
```

```
SaveWeightsLocal {
  Filename { std }
}
Alive { T }
WtFreeze { F }
AllowPruning { F }
Penalty { NoPenalty }
EtaModifier { 1.000000 }
}
mlp.input->compressNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.bias->compressNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.compressBuyer->autoBuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
```

```
  WtFreeze { F }
  AllowPruning { F }
  Penalty { NoPenalty }
  EtaModifier { 1.000000 }
}
mlp.input->autoBuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { T }
  AllowPruning { F }
  Penalty { NoPenalty }
  EtaModifier { 1.000000 }
}
mlp.bias->autoBuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.compressNonbuyer->autoNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
```

```
            }
mlp.input->autoNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { T }
  AllowPruning { F }
  Penalty { NoPenalty }
  EtaModifier { 1.000000 }
}
mlp.bias->autoNonbuyer {
  WeightWatcher {
    Active { F }
    MaxWeight { 1.000000 }
    MinWeight { 0.000000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp:autoBuyer->sumBuyer {
  WeightWatcher {
    Active { T }
    MaxWeight { 0.040000 }
    MinWeight { 0.040000 }
  }
  LoadWeightsLocal {
    Filename { std }
  }
  SaveWeightsLocal {
    Filename { std }
  }
  Alive { T }
  WtFreeze { F }
  AllowPruning { F }
  Penalty { NoPenalty }
  EtaModifier { 1.000000 }
}
mlp.autoNonbuyer->sumNonbuyer {
  WeightWatcher {
    Active { T }
```

```
      MaxWeight { 0.040000 }
      MinWeight { 0.040000 }
    }
    LoadWeightsLocal {
      Filename { std }
    }
    SaveWeightsLocal {
      Filename { std }
    }
    Alive { T }
    WtFreeze { F }
    AllowPruning { F }
    Penalty { NoPenalty }
    EtaModifier { 1.000000 }
  }
  mlp.sumBuyer->outputBuyer {
    Alive { T }
  }
  mlp.buyer->outputBuyer {
    Alive { T }
  }
  mlp.autoBuyer->classifier {
    WeightWatcher {
      Active { T }
      MaxWeight { -0.001000 }
      MinWeight { -3.000000 }
    }
    LoadWeightsLocal {
      Filename { std }
    }
    SaveWeightsLocal {
      Filename { std }
    }
    Alive { T }
    WtFreeze { F }
    AllowPruning { F }
    Penalty { NoPenalty }
    EtaModifier { 1.000000 }
  }
  mlp.autoNonbuyer->classifier {
    WeightWatcher {
      Active { T }
      MaxWeight { -0.001000 }
      MinWeight { -3.000000 }
    }
    LoadWeightsLocal {
      Filename { std }
    }
    SaveWeightsLocal {
      Filename { std }
    }
    Alive { T }
    WtFreeze { F }
    AllowPruning { F }
    Penalty { NoPenalty }
    EtaModifier { 1.000000 }
  }
  mlp.bias->classifier {
```

```
WeightWatcher {
  Active { F }
  MaxWeight { 1.000000 }
  MinWeight { 0.000000 }
}
LoadWeightsLocal {
  Filename { std }
}
SaveWeightsLocal {
  Filename { std }
}
Alive { T }
WtFreeze { F }
AllowPruning { F }
Penalty { NoPenalty }
EtaModifier { 1.000000 }
}
mlp.sumNonbuyer->outputNonbuyer {
  Alive { T }
}
mlp.nonbuyer->outputNonbuyer {
  Alive { T }
}
}
AnySave {
  file_name { f.CCMenu.dat }
}
AnyLoad {
  file_name { f.CCMenu.dat }
}
}
TestRun {
  Filename { Test }
  Part.Transformed { F }
}
Online {
  Filename { Online.dat }
}
}
```

**2. Spezifikations-Datei:**

APPLICATION customer_classification
UNLABELED AXIS
FROM 0 TO MAX
TRAINING FROM 0 TO 3500
VALIDATION RANDOM 0%


INPUT CLUSTER mlp.input

    BEGIN input1

```
      x = FILE DATA/data.txt COLUMN 1

    INPUT = scale(x)
END

BEGIN  input2
  x = FILE DATA/data.txt COLUMN 2

  INPUT = x
END

BEGIN  input3
  x = FILE DATA/data.txt COLUMN 3

  INPUT = x
END

BEGIN  input4
  x = FILE DATA/data.txt COLUMN 4

  INPUT = scale(x)
END

BEGIN  input5
  x = FILE DATA/data.txt COLUMN 5

  INPUT = scale(x)
END

BEGIN  input6
  x = FILE DATA/data.txt COLUMN 6

  INPUT = scale(x)
END

BEGIN  input7
  x = FILE DATA/data.txt COLUMN 7

  INPUT = scale(x)
END

BEGIN  input8
  x = FILE DATA/data.txt COLUMN 8

  INPUT = scale(x)
END

BEGIN  input9
  x = FILE DATA/data.txt COLUMN 9

  INPUT = scale(x)
END

BEGIN  input10
  x = FILE DATA/data.txt COLUMN 10
  INPUT = x
END
```

```
BEGIN input11
  x = FILE DATA/data.txt COLUMN 11
  INPUT = x
END

BEGIN input12
  x = FILE DATA/data.txt COLUMN 12
  INPUT = x
END

BEGIN input13
  x = FILE DATA/data.txt COLUMN 13
  INPUT = x
END

BEGIN input14
  x = FILE DATA/data.txt COLUMN 14
  INPUT = x
END

BEGIN input15
  x = FILE DATA/data.txt COLUMN 15
  INPUT = x
END

BEGIN input16
  x = FILE DATA/data.txt COLUMN 16
  INPUT = x
END

BEGIN input17
  x = FILE DATA/data.txt COLUMN 17

  INPUT = scale(x)
END

BEGIN input18
  x = FILE DATA/data.txt COLUMN 18

  INPUT = scale(x)
END

BEGIN input19
  x = FILE DATA/data.txt COLUMN 19

  INPUT = scale(x)
END

BEGIN input20
  x = FILE DATA/data.txt COLUMN 20

  INPUT = scale(x)
END

BEGIN input21
  x = FILE DATA/data.txt COLUMN 21

  INPUT = scale(x)
```

```
            END

            BEGIN  input22
              x = FILE DATA/data.txt COLUMN 22

              INPUT = scale(x)
            END

            BEGIN  input23
              x = FILE DATA/data.txt COLUMN 23

              INPUT = scale(x)
            END

            BEGIN  input24
              x = FILE DATA/data.txt COLUMN 24

              INPUT = scale(x)
            END

            BEGIN  input25
              x = FILE DATA/data.txt COLUMN 25

              INPUT = scale(x)
            END

            BEGIN  input26
              x = FILE DATA/data.txt COLUMN 26

              INPUT = scale(x)
            END

            BEGIN  input27
              x = FILE DATA/data.txt COLUMN 27

              INPUT = scale(x)
            END


        INPUT CLUSTER mlp.buyer

            BEGIN  buyer
              x = FILE DATA/data.txt COLUMN 28

              INPUT = IF x == 1 THEN 1 ELSE 0
            END


        INPUT CLUSTER mlp.nonbuyer

            BEGIN  nonBuyer
              x = FILE DATA/data.txt COLUMN 28

              INPUT = IF x == 0 THEN 1 ELSE 0
            END
```

```
            TARGET CLUSTER mlp.classifier

            BEGIN  probability
              x = FILE DATA/data.txt COLUMN 28

              TARGET = IF x == 1 THEN 1 ELSE 0
                 ASSIGN TO channelBuyer

              TARGET = IF x == 0 THEN 1 ELSE 0
                 ASSIGN TO channelNonbuyer
            END


            TARGET CLUSTER mlp.outputBuyer

            BEGIN  outputBuyer

              TARGET = 0
            END


            TARGET CLUSTER mlp.outputNonbuyer .

            BEGIN  outputNonbuyer

              TARGET = 0
            END


SIGNAL

BEGIN  response rate(0.25) = Postprocessing/Relative Sum(SIGNAL0 / SIGNAL1)
       tar = TARGET channelBuyer
  out = OUTPUT channelBuyer

  SIGNAL = IF out >= g_quantile(out , 0.25) AND tar == 1 THEN 1 ELSE 0

  SIGNAL = IF out >= g_quantile(out , 0.25)         THEN 1 ELSE 0
END


BEGIN  response rate(0.50) = Postprocessing/Relative Sum(SIGNAL2 / SIGNAL3)
       tar = TARGET channelBuyer
  out = OUTPUT channelBuyer

  SIGNAL = IF out >= g_quantile(out , 0.50) AND tar == 1 THEN 1 ELSE 0

  SIGNAL = IF out >= g_quantile(out , 0.50)         THEN 1 ELSE 0
END


BEGIN  response rate(0.75) = Postprocessing/Relative Sum(SIGNAL4 / SIGNAL5)
       tar = TARGET channelBuyer
  out = OUTPUT channelBuyer
```

SIGNAL = IF out >= g_quantile(out , 0.75) AND tar == 1 THEN 1 ELSE 0

SIGNAL = IF out >= g_quantile(out , 0.75)       THEN 1 ELSE 0
END


BEGIN  response rate(0.10) = Postprocessing/Relative Sum(SIGNAL6 / SIGNAL7)
     tar = TARGET channelBuyer
out = OUTPUT channelBuyer

SIGNAL = IF out >= g_quantile(out , 0.10) AND tar == 1 THEN 1 ELSE 0

SIGNAL = IF out >= g_quantile(out , 0.10)       THEN 1 ELSE 0
END


BEGIN  response rate(0.20) = Postprocessing/Relative Sum(SIGNAL8 / SIGNAL9)
     tar = TARGET channelBuyer
out = OUTPUT channelBuyer

SIGNAL = IF out >= g_quantile(out , 0.20) AND tar == 1 THEN 1 ELSE 0

SIGNAL = IF out >= g_quantile(out , 0.20)       THEN 1 ELSE 0
END


BEGIN  response rate(0.30) = Postprocessing/Relative Sum(SIGNAL10 / SIGNAL11)
     tar = TARGET channelBuyer
out = OUTPUT channelBuyer

SIGNAL = IF out >= g_quantile(out , 0.30) AND tar == 1 THEN 1 ELSE 0

SIGNAL = IF out >= g_quantile(out , 0.30)       THEN 1 ELSE 0
END


BEGIN  response rate(0.40) = Postprocessing/Relative Sum(SIGNAL12 / SIGNAL13)
     tar = TARGET channelBuyer
out = OUTPUT channelBuyer

SIGNAL = IF out >= g_quantile(out , 0.40) AND tar == 1 THEN 1 ELSE 0

SIGNAL = IF out >= g_quantile(out , 0.40)       THEN 1 ELSE 0
END


BEGIN  response rate(0.50) = Postprocessing/Relative Sum(SIGNAL14 / SIGNAL15)
     tar = TARGET channelBuyer
out = OUTPUT channelBuyer

SIGNAL = IF out >= g_quantile(out , 0.50) AND tar == 1 THEN 1 ELSE 0

SIGNAL = IF out >= g_quantile(out , 0.50)       THEN 1 ELSE 0
END


BEGIN  response rate(0.60) = Postprocessing/Relative Sum(SIGNAL16 / SIGNAL17)

```
        tar = TARGET channelBuyer
    out = OUTPUT channelBuyer

    SIGNAL = IF out >= g_quantile(out , 0.60) AND tar == 1 THEN 1 ELSE 0

    SIGNAL = IF out >= g_quantile(out , 0.60)        THEN 1 ELSE 0
    END


BEGIN  response rate(0.70) = Postprocessing/Relative Sum(SIGNAL18 / SIGNAL19)
        tar = TARGET channelBuyer
    out = OUTPUT channelBuyer

    SIGNAL = IF out >= g_quantile(out , 0.70) AND tar == 1 THEN 1 ELSE 0

    SIGNAL = IF out >= g_quantile(out , 0.70)        THEN 1 ELSE 0
    END


BEGIN  response rate(0.80) = Postprocessing/Relative Sum(SIGNAL20 / SIGNAL21)
        tar = TARGET channelBuyer
    out = OUTPUT channelBuyer

    SIGNAL = IF out >= g_quantile(out , 0.80) AND tar == 1 THEN 1 ELSE 0

    SIGNAL = IF out >= g_quantile(out , 0.80)        THEN 1 ELSE 0
    END


BEGIN  response rate(0.90) = Postprocessing/Relative Sum(SIGNAL22 / SIGNAL23)
        tar = TARGET channelBuyer
    out = OUTPUT channelBuyer

    SIGNAL = IF out >= g_quantile(out , 0.90) AND tar == 1 THEN 1 ELSE 0

    SIGNAL = IF out >= g_quantile(out , 0.90)        THEN 1 ELSE 0
    END
```

**3. Modell-Top-Datei:**

```
            net {
                cluster ( IN            ) buyer;
                cluster ( IN            ) input;
                cluster ( IN            ) nonbuyer;
                    cluster ( DIM( LIKE input ), HID) compressBuyer;
                    cluster ( DIM( LIKE input ), HID) compressNonbuyer;
                    cluster ( DIM( LIKE input ), HID) autoBuyer;
                    cluster ( DIM( LIKE input ), HID) autoNonbuyer;
                    cluster ( DIM( 1       ), HID) sumBuyer;
                    cluster ( DIM( 1       ), HID) sumNonbuyer;
                    cluster ( OUT, MULT       ) outputBuyer;
                    cluster ( OUT          ) classifier;
                    cluster ( OUT, MULT        ) outputNonbuyer;
```

```
connect ( input          -> compressBuyer         );
connect ( bias           -> compressBuyer         );
connect ( compressBuyer   -> autoBuyer             );
connect ( input          -> autoBuyer  , DIAGONAL(-1.0));
connect ( bias           -> autoBuyer             );
connect ( autoBuyer       -> sumBuyer             );
connect ( sumBuyer        -> outputBuyer          );
connect ( buyer          -> outputBuyer           );

connect ( input          -> compressNonbuyer        );
connect ( bias           -> compressNonbuyer        );
connect ( compressNonbuyer -> autoNonbuyer           );
connect ( input          -> autoNonbuyer, DIAGONAL(-1.0));
connect ( bias           -> autoNonbuyer           );
connect ( autoNonbuyer    -> sumNonbuyer            );
connect ( sumNonbuyer     -> outputNonbuyer         );
connect ( nonbuyer        -> outputNonbuyer         );

connect ( autoBuyer       -> classifier            );
connect ( autoNonbuyer    -> classifier            );
connect ( bias           -> classifier            );

} mlp;
```

In diesem Dokument sind folgende Veröffentlichungen zitiert:

[1] J. C. Bezdek et al, Detection and Characterization of Cluster Substructure, II. Fuzzy c Varieties and Convex Combinations thereof SIAM Journal on Applied Mathematics, Volume 40, No. 2, Seite 358-370, 1981

[2] Ackley, Hinton, Seynowski, A learning algorithm for Boltzmann machines, Cognitive Science, 9, S, 137 - 169, 1985

**Patentansprüche**

1.  Verfahren zur rechnergestützten Auswahl eines Clusters aus einer vorgegebenen Mehrzahl an Clustern gemäß einer Eingangsgröße,

    a) bei dem jeder der vorgegebenen Cluster durch einen eigenen Autoassoziator, der eine Eingangsgröße auf eine Ausgangsgröße abbildet, repräsentiert wird,
    b) bei dem eine vorgegebene Eingangsgröße jedem Autoassoziator als Eingangsgröße zugeführt wird und für jeden Autoassoziator eine Abweichung der Eingangsgröße von der jeweiligen Ausgangsgröße ermittelt wird (610-640),
    c) bei der alle Abweichungen zur Ermittlung jeweiliger Wahrscheinlichkeiten für die Zugehörigkeit der Eingangsgröße zu dem jeweiligen durch den Autoassoziator repräsertierten, vorgegebenen Cluster transformiert und gewichtet werden und die so erhaltenen Werte anschließend zu einer Zugehörigkeitsgröße zusammengefasst werden (650, 660),
    d) bei dem unter Verwendung der Zugehörigkeitsgröße der Cluster aus den vorgegebenen Clustern ausgewählt wird.

2.  Verfahren nach Anspruch 1,
    bei dem die vorgegebene Eingangsgröße eine mehrdimensionale Eingangsgröße ist.

3.  Verfahren nach Anspruch 2,
    bei dem die vorgegebene Eingangsgröße sowohl nominale, als auch ordinale sowie stetige Größen aufweist.

4.  Verfahren nach einem der Ansprüche 1 bis 3,

bei dem die Zugehörigkeitsgröße eine eindimensionale Größe ist.

**5.** Verfahren nach einem der Ansprüche 1 bis 4,
eingesetzt für eine Klassifikation eines Zustands eines technischen Systems, welcher durch die Eingangsgröße beschrieben wird, wobei die vorgegebenen Cluster Zustandsklassen des technischen Systems repräsentieren.

**6.** Verfahren nach Anspruch 5,
eingesetzt zur Überwachung und/oder Steuerung des technischen Systems.

**7.** Verfahren nach einem der Ansprüche 1 bis 4,
eingesetzt für eine Klassifikation eines möglichen Kunden, wobei Eigenschaften des möglichen Kunden durch die vorgegebene Eingangsgröße beschrieben werden, wobei die vorgegebenen Cluster zumindest eine Klasse "Kunde" und eine Klasse "Nicht Kunde" beschreiben.

**8.** Anordnung zur rechnergestützten Auswahl eines Clusters aus einer vorgegebenen Mehrzahl an Clustern gemäß einer Eingangsgröße mit Autoassoziatoren,

a) wobei jeder der vorgegebenen Cluster durch einen eigenen Autoassoziator, der eine Eingangsgröße auf eine Ausgangsgröße abbildet, repräsentierbar ist,
b) wobei eine vorgegebene Eingangsgröße jedem Autoassoziator als Eingangsgröße zuführbar ist und für jeden Autoassoziator eine Abweichung der Eingangsgröße von der jeweiligen Ausgangsgröße ermittelbar ist,
c) wobei alle Abweichungen zur Ermittlung jeweiliger Wahrscheinlichkeiten für die Zugehörigkeit der Eingangsgröße zu dem jeweiligen durch den Autoassoziator repräsentierten, vorgegebenen Cluster transformierbar und gewichtbar sind und die so erhaltenen Werte anschließend zu einer Zugehörigkeitsgröße zusammenfassbar sind,
d) wobei unter Verwendung der Zugehörigkeitsgröße der Cluster aus den vorgegebenen Clustern auswählbar ist.

**9.** Anordnung nach Anspruch 8,
bei der die Autoassoziatoren aus miteinander verbundenen Rechenelementen aufgebaut sind und zumindest ein Teil der Rechenelemente künstliche Neuronen sind.

**10.** Anordnung nach Anspruch 9,
bei der zumindest ein Teil von Verbindungen zwischen den Rechenelementen variabel ausgestaltet ist.

**11.** Anordnung nach einem der Ansprüche 8 bis 10,
eingesetzt zu einer Klassifikation eines Zustands eines technischen Systems, welcher durch die vorgegebene Eingangsgröße beschrieben wird und wobei die vorgegebenen Cluster Zustandsklassen des technischen Systems repräsentieren, derart, dass unter Verwendung der Zugehörigkeitsgröße eine von den Zustandsklassen ausgewählt wird.

**12.** Anordnung nach Anspruch 11,
mit einer Messanordnung zur Erfassung physikalischer Signale, mit denen das technische System beschrieben wird.

**13.** Anordnung nach einem der Ansprüche 8 bis 10,
eingesetzt zu einer Klassifikation eines möglichen Kunden als "Kunde" oder als "Nicht Kunde", wobei Eigenschaften des möglichen Kunden durch die vorgegebeneEingangsgröbe beschrieben werden und wobei die vorgegebenen Cluster zumindest eine Klasse "Kunde" und eine Klasse "Nicht Runde" beschreiben, derart, dass unter Verwendung der Zugehörigkeitsgröße eine von den Klassen ausgewählt wird.

**14.** Computerprogramm-Erzeugnis mit einem Programm, das es einem Computer ermöglicht, nachdem es in einen Speicher des Computers geladen worden ist, folgende Schritte durchzuführen zur rechnergestützten Auswahl eines Clusters aus einer vorgegebenen Mehrzahl an Clustern gemäß einer Eingangsgröße:

a) jeder der vorgegebenen Cluster wird durch einen eigenen Autoassoziator, der eine Eingangsgröße auf eine Ausgangsgröße abbildet, repräsentiert,
b) eine vorgegebene Eingangsgröße wird jedem Autoassoziator als Eingangsgröße zugeführt und für jeden

71

Autoassoziator wird eine Abweichung der Eingangsgröße von der jeweiligen Ausgangsgröße ermittelt (610-640),

c) alle Abweichungen werden zur Ermittlung jeweiliger Wahrscheinlichkeiten für die Zugehörigkeit der Eingangsgröße zu dem jeweiligen durch den Autoassoziator repräsentierten, vorgegebenen Cluster transformiert und gewichtet und die so erhaltenen Werte werden anchließend zu einer Zugehörigkeitsgröße zusammengefasst (650, 660),

d) unter Verwendung der Zugehörigkeitsgröße wird der Cluster aus den vorgegebenen Clustern ausgewählt.

**15.** Computerlesbares Speichermedium auf dem ein Computerprogramm-Erzeugnis nach Anspruch 14 gespeichert ist.

**Claims**

**1.** Method for computer-aided selection of a cluster from a prescribed plurality of clusters on the basis of an input variable,

a) in which each of the prescribed clusters is represented by a dedicated autoassociator which maps an input variable onto an output variable,

b) in which a prescribed input variable is supplied to each autoassociator as an input variable, and for each autoassociator a discrepancy between the input variable and the respective output variable is ascertained (610-640),

c) in which all the discrepancies are transformed and weighted in order to ascertain respective probabilities for the association of the input variable with the respective prescribed cluster represented by the autoassociator, and the values obtained in this manner are then combined to form an association variable (650, 660),

d) in which the association variable is used to select the cluster from the prescribed clusters.

**2.** Method according to Claim 1,
in which the prescribed input variable is a multidimensional input variable.

**3.** Method according to Claim 2,
in which the prescribed input variable has both nominal and ordinal variables and also constant variables.

**4.** Method according to one of Claims 1 to 3,
in which the association variable is a one-dimensional variable.

**5.** Method according to one of Claims 1 to 4,
used for classifying the state of a technical system as described by the input variable, where the prescribed clusters represent state classes for the technical system.

**6.** Method according to Claim 5,
used for monitoring and/or or controlling the technical system.

**7.** Method according to one of Claims 1 to 4,
used for classifying a potential customer, where characteristics of the potential customer are described by the prescribed input variable, with the prescribed clusters describing at least a "customer" class and a "non-customer" class.

**8.** Arrangement for computer-aided selection of a cluster from a prescribed plurality of clusters on the basis of an input variable using autoassociators,

a) where each of the prescribed clusters can be represented by a dedicated autoassociator which maps an input variable onto an output variable,

b) where a prescribed input variable can be supplied to each autoassociator as an input variable, and for each autoassociator a discrepancy between the input variable and the respective output variable can be ascertained,

c) where all the discrepancies can be transformed and weighted in order to ascertain respective probabilities for the association of the input variable with the respective prescribed cluster represented by the autoassociator, and the values obtained in this way can then be combined to form an association variable,

d) here the association variable can be used to select the cluster from the prescribed clusters.

**9.** Arrangement according to Claim 8,
in which the autoassociators are constructed from interconnected computation elements, and at least some of the computation elements are artificial neurons.

**10.** Arrangement according to Claim 9,
in which at least some of the connections between the computation elements are of varying form.

**11.** Arrangement according to one of Claims 8 to 10,
used for classifying the state of a technical system as described by the prescribed input variable, and where the prescribed clusters represent state classes for the technical system such that the association variable is used to select one of the state classes.

**12.** Arrangement according to Claim 11,
having a measuring arrangement for detecting physical signals which are used to describe the technical system.

**13.** Arrangement according to one of Claims 8 to 10,
used for classifying a potential customer as a "customer" or as a "non-customer", where characteristics of the potential customer are described by the prescribed input variable and where the prescribed clusters describe at least a "customer" class and a "non-customer" class such that the association variable is used to select one of the classes.

**14.** Computer-program product having a program which, when it has been loaded into a memory in a computer, allows the computer to perform the following steps for computer-aided selection of a cluster from a prescribed plurality of clusters on the basis of an input variable:

a) each of the prescribed clusters is represented by a dedicated autoassociator which maps an input variable onto an output variable,
b) a prescribed input variable is supplied to each autoassociator as an input variable, and for each autoassociator a discrepancy between the input variable and the respective output variable is ascertained (610-640),
c) all the discrepancies are transformed and weighted in order to ascertain respective probabilities for the association of the input variable with the respective prescribed cluster represented by the autoassociator, and the values obtained in this manner are then combined to form an association variable (650, 660),
d) the association variable is used to select the cluster from the prescribed clusters.

**15.** Computer-readable storage medium on which a computer-program product according to Claim 14 is stored.

**Revendications**

**1.** Procédé destiné à la sélection, assistée par ordinateur, d'un groupe parmi une pluralité donnée de groupes, en fonction d'une grandeur d'entrée,

a) dans lequel chacun des groupes donnés est représenté par un autoassociateur individuel qui reproduit une grandeur d'entrée sur une grandeur de sortie,
b) dans lequel une grandeur d'entrée donnée est appliquée en tant que grandeur d'entrée à chaque autoassociateur et, pour chaque associateur, on détermine (610 - 640) une divergence de la grandeur d'entrée par rapport à la grandeur respective de sortie,
c) dans lequel, en vue de la détermination des probabilités respectives pour l'appartenance de la grandeur d'entrée au groupe donné respectif représenté par l'autoassociateur, toutes les divergences sont transformées et pondérées et les valeurs ainsi obtenues sont ensuite assemblées pour former une grandeur d'appartenance (650 - 660),
d) dans lequel, en utilisant la grandeur d'appartenance, on sélectionne le groupe parmi les groupes donnés.

**2.** Procédé selon la revendication 1
dans lequel la grandeur d'entrée donnée est une grandeur d'entrée à plusieurs dimensions.

**3.** Procédé selon la revendication 2
dans lequel la grandeur d'entrée donnée comports des grandeurs non seulement nominales, mais aussi ordinales et continues.

**4.** Procédé selon l'une des revendications 1 à 3
dans lequel la grandeur d'appartenance est une grandeur à une dimension.

**5.** Procédé selon l'une des revendications 1 à 4
mis en oeuvre pour la classification d'un état d'un système technique décrit par la grandeur d'entrée, les groupes donnés représentant des classes d'état du système technique.

**6.** Procédé selon la revendication 5
utilisé pour la surveillance et/ou la commande du système technique.

**7.** Procédé selon l'une des revendications 1 à 4
mis en oeuvre pour la classification d'un client potentiel, des propriétés du client potentiel étant décrites par la grandeur d'entrée donnée et les groupes donnés décrivant au moins une classe "client" et une classe "pas client".

**8.** Dispositif destiné à la sélection, assistée par ordinateur, d'un groupe parmi une pluralité donnée de groupes, en fonction d'une grandeur d'entrée, et comportant des autoassociateurs,

a) chacun des groupes donnés étant représenté par un autoassociateur individuel qui reproduit une grandeur d'entrée sur une grandeur de sortie,
b) une grandeur d'entrée donnée pouvant être appliquée en tant que grandeur d'entrée à chaque autoassociateur et, pour chaque associateur, une divergence de la grandeur d'entrée par rapport à la grandeur respective de sortie pouvant être déterminée,
c) en vue de la détermination des probabifités respectives pour l'appartenance de la grandeur d'entrée au groupe donné respectif représenté par l'autoassociateur, toutes les divergences pouvant être transformées et pondérées et les valeurs ainsi obtenues pouvant ensuite être assemblées pour former une grandeur d'appartenance,
d) en utilisant la grandeur d'appartenance, le groupe pouvant être sélectionné parmi les groupes donnés.

**9.** Dispositif selon la revendication 8
dans lequel les autoassociateurs sont établis à partir d'éléments de calcul reliés les uns aux autres et au moins une partie des éléments de calcul sont des neurones artificiels.

**10.** Dispositif salon la revendication 9
dans lequel au moins une partie des jonctions entre les éléments de calcul sont variables.

**11.** Dispositif selon l'une des revendications 8 à 10
mis en oeuvre pour une classification d'un état d'un système technique décrit par la grandeur d'entrée donnée, les groupes donnés représentant des classes d'état du système technique, de telle manière que, en utilisant la grandeur d'appartenance, une des classes d'état est sélectionnée.

**12.** Dispositif selon la revendication 11
comportant un dispositif de mesure destiné à capter des signaux physiques avec lesquels le système technique est décrit.

**13.** Dispositif selon l'une des revendications 8 à 10
mis en oeuvre pour une classification d'un client potentiel en tant que "client" ou en tant que "pas client", des propriétés du client potentiel étant décrites par la grandeur d'entrée donnée et les groupes donnés décrivant au moins une classe "client' et une classe "pas client", de telle manière que, en utilisant la grandeur d'appartenance, une des classes est sélectionnée.

**14.** Produit logiciel pour ordinateur comportant un programme qui permet à un ordinateur, une fois que le programme a été chargé dans une mémoire de l'ordinateur, d'exécuter les étapes suivantes destinées à la sélection assistée par ordinateur d'un groupe parmi une pluralité donnée de groupes en fonction d'une grandeur d'entrée:

a) chacun des groupes donnés est représenté par un autoassociateur individuel qui reproduit une grandeur d'entrée sur une grandeur de sortie,

b) une grandeur d'entrée donnée est appliquée en tant que grandeur d'entrée à chaque autoassociateur et, pour chaque autoassociateur, une divergence entre la grandeur d'entrée et la grandeur de sortie respective est déterminée (610 - 640),

c) en vue de la détermination des probabilités respectives pour l'appartenance de la grandeur d'entrée au groupe donné respectif représenté par l'autoassociateur, toutes les divergences sont transformées et pondérées et les valeurs ainsi obtenues sont ensuite assemblées pour former une grandeur d'appartenance (650 - 660),

d) en utilisant la grandeur d'appartenance, on sélectionne le groupe parmi les groupes donnés.

**15.** Support de mémoire lisible par ordinateur sur lequel est enregistré un produit logiciel pour ordinateur selon la revendication 14

# FIG 1

$$\begin{bmatrix} w_{11}...w_{1m} \\ 0 \ ... \ 0 \end{bmatrix} \begin{bmatrix} 0 \ ... \ 0 \\ w_{21}...w_{2m} \end{bmatrix}$$

FIG 2

# FIG 3

# FIG 4A

$$\begin{bmatrix} w_{11}...w_{1m} \\ 0 \ ... \ 0 \end{bmatrix} \begin{bmatrix} 0 \ ... \ 0 \\ w_{21}...w_{2m} \end{bmatrix}$$

## FIG 4B

FIG 4C

# FIG 5

# FIG 6

```
┌─────────────────────────┐
│  Input/Vorverarbeitung  │── 610
└─────────────────────────┘
            │
            ▼
┌─────────────────────────┐
│      Kompression        │── 620
└─────────────────────────┘
            │
            ▼
┌─────────────────────────┐
│     Dekompression       │── 630
└─────────────────────────┘
            │
            ▼
┌─────────────────────────┐
│    Fehlerermittlung     │── 640
└─────────────────────────┘
            │
            ▼
┌─────────────────────────┐
│       gewichteter       │── 650
│  Rekonstruktionsfehler  │
└─────────────────────────┘
            │
            ▼
┌─────────────────────────┐
│ Output/Nachverarbeitung │── 660
└─────────────────────────┘
```

600